(19) Europäisches Patentamt
European Patent Office
Office européen des brevets

(11) Publication number: **0 307 974 B1**

# (12) EUROPEAN PATENT SPECIFICATION

(45) Date of publication of patent specification: **26.08.92**

(51) Int. Cl.⁵: **B64D 41/00**

(21) Application number: **88200774.3**

(22) Date of filing: **21.04.88**

## (54) Hydraulic power supplies.

(30) Priority: **17.09.87 US 97857**

(43) Date of publication of application:
**22.03.89 Bulletin 89/12**

(45) Publication of the grant of the patent:
**26.08.92 Bulletin 92/35**

(84) Designated Contracting States:
**DE FR GB IT NL**

(56) References cited:
**US-A- 4 584 654**

**OLEODINAMICA, PNEUMATICA. vol. 27, no. 4, April 1986, MILANO IT pages 88 - 99; Christian Massat: "Sistema oleoidraulico dell aereo A310"**

**MEASUREMENT AND CONTROL. vol. 7, no. 4, July 1985, LONDON GB pages 167 - 174; A.J. McGregor et al.: "A multipurpose microprocessor controller for hydraulic pumps"**

**HYDRAULICS AND PNEUMATICS. vol. 36, no. 9, September 1983, CLEVELAND US pages 61 - 66; V.J.Austin: "B-1B Hydraulics : practical, innovative designs "**

(73) Proprietor: **THE BOEING COMPANY**
**P.O. Box 3707 Mail Stop 7E-25**
**Seattle Washington 98124(US)**

(72) Inventor: **Archung, Ralph**
**23115 S.E. 40 th Ct.**
**Issaquah, WA 98027(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

EP 0 307 974 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

TECHNICAL FIELD OF THE INVENTICN

In one aspect, the present invention relates to novel, improved hydraulic power supplies which include a programmable solid state controller for: controlling the operation of the system's pumps and generating information indicative of the status of the system.

In a second aspect, the present invention relates to aircraft which are equipped with hydraulically powered devices and which have systems as described in the preceding paragraph that supply the pressurized operating fluid for those hydraulically operated devices.

The term "hydraulic power supply" is employed above and hereinafter to identify a system which is capable of making pressurized hydraulic fluid available -- for example, to operate the control surfaces and brakes of an airplane, to raise and steer the airplane's landing gear, and to operate such other hydraulically operated equipment as may be on board.

BACKGROUND OF THE INVENTION

Heretofore, commercial aircraft, including the first generations of those propelled by jet engines, employed cable and pushrod connections between the flight control surfaces on the wings and tail of the aircraft and the control wheel, column, and pedals in the cockpit or flight deck. In some instances, these manual flight control systems were hydraulically boosted. However, these hydraulic systems were strictly auxiliary in nature, being employed only for such mundane tasks as raising landing gear. Thus, the failure of a hydraulic power supply system in such aircraft was of no serious consequence as the plane could continue to the next destination with the landing gear down (in some cases the gear could be raised with a manual handcrank).

With the advent of larger jet aircraft such as the Boeing 747, fully powered operating systems for the aircraft's flight control surfaces became mandatory. Such airplanes are simply too large for a pilot with reasonable strength to fly and land safely without assistance. Thus, particularly in the case of larger aircraft, the status of hydraulic operating systems for the primary control surfaces has been elevated from auxiliary to primary. In fact, these hydraulic systems have become even more critical than the aircraft's engines because a safe landing can conceivably be made without engines whereas this is essentially impossible without hydraulic power.

An onboard supply of pressurized hydraulic fluid is required for the operation of an airplane's hydraulic systems. The criticality of hydraulic power supplies for the hydraulic systems of larger aircraft requires that these hydraulic power supplies be redundant. In addition, those systems must be easily serviced and maintained so that the airplane will not be delayed while mechanics attempt to diagnose and repair aircraft that are prepared for takeoff.

In aircraft with a flight crew of three, it is customarily the duty of the flight engineer to monitor the hydraulic systems and hydraulic power supplies of the aircraft during flight and to advise the aircraft pilots and ground personnel if faults occur. The latest generation of commercial airplanes, however, is designed to be operated by a crew of two; i.e., without a flight engineer. Thus, the functions, duties, and assignments of the flight engineer must be eliminated by automation or simplified so that they can be performed by the pilots without increasing flight crew duties to the extent that crew members are overburdened and can no longer operate the airplane safely.

The current approach to the automation of an aircraft's hydraulic power supplies involves the hard wiring of the appropriate components. Because the components of a particular system may be located on the flight deck and also at remote locations in the aircraft, and because these components typically each have their own separate logic, locating a fault can be a tedious and time consuming task. Furthermore, the "hard wiring" approach to the automation of onboard hydraulic power supplies is costly, both in terms of weight and money, because of the hardware and the extensive electrical wiring that is required.

A state of the art onboard hydraulic power supply for making pressurized hydraulic fluid available to at least one hydraulically operated device of an aircraft, which includes the features of the preamble of claim 1 is described in Oleodinamica, Pneumatica, Vol. 27, No. 4, April 1986, Milano (It), pp 88-99; Christian Massat: "Sistema oleoidraulico dell'aereo A310".

A hydraulic power supply comprising a single hydraulic pump controlled by a dedicated solid state controller is described in Measurement & Control, Vol. 7, No. 4, July 1985. London (GB), pp. 167-174: A.J. McGregor et al.: "A multipurpose microprocessor controller for hydraulic pumps". This article does not, however, relate to hydraulic systems on board aircraft, nor does it refer to the use of a single controller for controlling a plurality of pumps.

SUMMARY OF THE INVENTION

I have now invented, and disclosed herein, novel onboard hydraulic power supplies for aircraft which, in contrast to the above prior art hydraulic power supplies to employing extensive hard wiring, are less expensive, lighter in weight, and easier to troubleshoot and maintain. At the same time, these novel systems meet the desired goal of reducing flight crew workload, thereby making the aircraft in which they are installed easier and safer to fly.

According to the invention, this is accomplished by a centralized solid state controller interconnecting said control means, said sensor means, said pumps and said display means, inputs from said control means and said sensor means being ruted to said controller and said controller comprising a self-contained chard possessing all of the logic necessary for generating outputs to control said pumps and to continually make available said information to said display means.

Preferred embodiments of the hydraulic power supply in accordance with the invention form the subject-matter of the dependent claims 2-16. In addition, the controller's logic can readily be configured to: verify the validity of system information with a reasonableness check; perform a system/self-test upon command and transmit information related to failures to a remotely located, central maintenance computer; and verify the proper configuration of a flight deck hydraulic control panel prior to starting the aircraft engines.

The invention further provides an aircraft, equipped with at least one novel hydraulic power supply as described above.

Preferred embodiments of the aircraft according to the invention are described in the dependent claims 18-20.

Typically, aircraft of the type with which the present invention is concerned will have more than one engine; and a separate hydraulic power supply driven by each engine will be employed to provide safe operation through redundancy. In these applications of my invention, separate, identical cards are employed to control each of the multiple hydraulic power supplies. A different control scheme may be required for each of the power supplies. The identical cards are readily programmed to meet this requirement by connecting the system inputs and outputs to appropriate pins of each different card.

By routing all inputs to one central location in accord with the principles of the present invention and by controlling the system pumps and generating status indicative outputs with solid state logic at that location, the wiring required to automate an aircraft's hydraulic power supply can be significantly reduced. This results in corresponding savings in cost and weight and significantly simplifies the location and repair of faults. In the case of one particular airplane, for example, the weight saving has been estimated to be as high as 12.2 kg (27 pounds); and the recurring cost savings is currently estimated at $960 per airplane.

## OBJECTS OF THE INVENTION

From the foregoing, it will be apparent to the reader that the primary object of the invention resides in the provision of novel, improved, hydraulic power supplies.

Other more specific but nevertheless important objects of the invention reside in the provision of hydraulic power supplies as characterized in the preceding object and particularly designed for onboard aircraft applications:

which are particularly designed to supply the fluid for operating those hydraulic mechanisms of aircraft which require too much strength to operate safely (or even at all) without force multiplication;

which are capable of reducing the workload of an airplane's flight deck crew by automating hydraulic power supply system monitoring and other functions relating to those power supplies that were heretofore performed by a crew member;

which are lighter, less expensive, and easier to troubleshoot than onboard hydraulic power supplies heretofore automated by hard wiring;

which can be employed in concert to provide the redundancy required for the safe operation anes in which hydraulic operation of control and other mechanisms has a primary status;

in which the system pumps are controlled from a central location and in which all inputs are to that location and all outputs emanate therefrom;

which employ a solid state controller that is a single, self-contained card with logic which is readily programmable to meet the requirements imposed on a particular hydraulic power supply;

which, in conjunction with the preceding object, employ a solid state controller that is capable of: performing system/self tests upon command and transmitting information relating to failures and their location to a remotely located, central maintenance computer;

which are as least as capable of reducing the effort required to operate and monitor the power supply as heretofore employed, hard wired approaches to the automation of such systems.

Other important objects and features and additional advantages of my invention will be apparent to the reader from the foregoing and the appended claims and as the ensuing detailed description and discussion proceeds in conjunction with the accompanying drawing.

## BRIEF DESCRIPTION OF THE DRAWING

In the drawing:

FIG. 1 is a plan view of one airplane which is designed to be equipped with hydraulic power supplies embodying the principles of the present invention;

FIG. 2 is a block diagram of a representative hydraulic power supply;

FIG. 3 is a front view of a cockpit panel for the hydraulic power supply of FIG. 2;

FIG. 4 depicts a representative display on an engine indicating and crew alerting system (EICAS) which is located on the flight deck of the aircraft and which provides the flight deck crew with a continually updated, real time report on the status of the hydraulic power supply;

FIG. 5 is a mechanical diagram of the hydraulic power supply of FIG. 2;

FIG. 6 shows the relationship between FIGS. 6A and 6B which together constitute a block diagram of the hydraulic power supply;

FIG. 7 shows the relationship between FIGS. 7A and 7B which together constitute a schematic diagram of a solid state controller for the hydraulic power supply associated with the Number 4 engine of the airplane of FIG. 1; FIGS. 7A and 7B also show the inputs to and outputs from the solid state controller; and

FIGS. 8-10 are schematic diagrams of the solid state controllers for the power supplies associated with the Numbers 3, 2, and 1 engines of the airplane respectively; these figures also show the inputs to and outputs from those controllers.

## DETAILED DESCRIPTION OF THE INVENTION

I pointed out above that the novel hydraulic power supplies disclosed herein are particularly designed to make available the pressurized hydraulic fluid required to operate the control surfaces and brakes of large commercial aircraft and to raise and steer the landing gear of such aircraft. One particular aircraft of this type is the Boeing 747. A Boeing 747 is depicted pictorially in FIG. 1 and identified by reference character 20.

Airplane 20 is of conventional configuration. It includes: a fuselage 22 with a flight deck 24; left and right, sweptback wings 26 and 28 from which No. 1, No. 2, No. 3, and No. 4 engines 30, 32, 34, and 36 are supported by pylons 38; left and right horizontal stablizers 40 and 42; and a vertical stablizer 44. Airplane 20 has retractable, steerable, main landing gear 46; wing-supported landing gear 47; and also steerable and retractable nose gear 48. Both the main landing gear 46 and nose gear 48 are retracted and steered hydraulically, and the landing gear are equipped with redundant braking systems which are also operated hydraulically.

The flight control surfaces of airplane 20 are also hydraulically operated. These include: inboard and outboard trailing edge flaps 50 and 52, inboard and outboard ailerons 54 and 56, and inboard and outboard spoilers identified generally by reference characters 58 and 60. Also numbered among the control surfaces are inboard and outboard pitch control surfaces or elevators 61 and 62 respectively appended to left and right, horizontal stablizers 40 and 42 and an upper, vertical directional control surface or rudder 63 appended to vertical stablizer 44.

Turning now to FIG. 2, the pressurized hydraulic fluid for the systems employed to operate the mechanisms identified in the last two paragraphs is redundantly supplied by four independent hydraulic power supplies 64, 66, 68, and 70. These systems have pumps 72 that are respectively driven by the number 1, 2, 3, and 4 engines identified by reference characters 30...36 in FIG. 1. Except in the case of the aircraft's braking systems discussed below, the four hydraulic power supplies are completely isolated so that hydraulic fluid cannot transfer from one power supply to another and thereby cause operating anomalies or failures.

The hydraulic power supply 70 with the pump 72 driven by the No. 4 engine 36 of airplane 20 is representative.

The mechanical components of hydraulic power supply 70, illustrated in FIG. 5, include: a hydraulic fluid reservoir 73 equipped with a fluid level transmitter 74 and a relief valve 75. This reservoir is pressurized for efficient operation of the power supply with air supplied from a duct 76 in the pneumatic system of airplane 20 via a reservoir air pressurization module 77.

The hydraulic fluid is pumped from hydraulic fluid reservoir 73 through hydraulic fluid supply line 78 to the various operating systems of airplane 20 by engine driven pump 72, an air driven demand pump 80, and an electrically driven auxiliary pump 82.

Auxiliary pump 82 operates only when airplane 20 is on the ground and engines 30...36 are shut down.

As pump 72 is driven by engine number 4, it runs whenever that engine is operating.

Demand pump 80 can be operated in concert with pump 72 to meet increased demands upon power supply 70. It can also be operated in place of pump 72 if the Number 4 engine 36 is shut down because of overheating or for any other reason. Demand pump 80 is driven by air from the pneumatic system of airplane 20 and is operated in a predictive fashion whenever the demand upon hydraulic power supply 70 will be increased; e.g., when the main landing gear 46 of the airplane are being raised, or when the flaps 50 and 52 are being lowered, or when a number of hydraulically powered systems are operating simultaneously as is the case when airplane 20 is landing.

Downstream from pumps 72, 80, and 82 is a pressure filter module 84 which includes filters 86 and 88, a pressure indicator 90 which monitors the pressure across filters 86 and 88, and a relief valve 92. When the latter is open, it bypasses hydraulic fluid back to reservoir 73 through a bypass 94 to keep the pressure on that fluid from exceeding a preselected level.

Hydraulic fluid returned to reservoir 73 from the operating systems of airplane 20 flows first through a return filter module 96. That module includes a filter 98, a Δ pressure indicator 100 for monitoring the pressure across filter 98, and a relief valve 102 in a filter bypass 104.

The fluid in hydraulic power supply 70 is cooled to keep its temperature and the temperatures reached by the mechanical components of the hydraulic power supply within safe operating limits. To this end, the three pumps 72, 80, and 82 of hydraulic power supply system 70 are equipped with case drains 106, 108, and 110. These are connected to a case drain module 112.

In case drain module 112, hydraulic fluid circulated to that module from pumps 72 and 80 is circulated through filters 114 and 116 to remove impurities. Delta (Δ) pressure indicators 118 and 119 monitor the pressures across these filters.

A third filter 120 in case drain 110 removes impurities from the fluid flowing through that drain.

The hot hydraulic fluid discharged from case drain module 112 is cooled in a heat exchanger 122 by fuel drawn from the fuel system of airplane 20 and circulated through a heat exchanger coil 125 in module 112. The heat exchanger is connected to case drain module 112 by a line 124, and the cooled hydraulic fluid is returned to reservoir 73 via return filter module 96 through a heat exchanger discharge line 126.

The hydraulic power supplies 64, 66, and 68 driven by the Number 1, 2, and 3 engines 30...34 may be identical to the system 70 just described except that they will typically not have that electrically driven auxiliary pump 82 of system 70 which provides hydraulic service on the ground when the engines 30...36 of airplane 20 are shut down.

Also, the demand pumps 72 of the hydraulic power supplies 66 and 68 associated with Number 2 and Number 3 engines 32 and 34 will typically be driven electrically rather than being powered by air drawn from the pneumatic system of airplane 20.

Nevertheless, as an option, the hydraulic system 64 associated with the Number 1 engine 80 may also be equipped with an electrically driven auxiliary pump. Another option is to substitute pneumatically driven demand pumps for the electrically driven demand pumps in the hydraulic power supplies 66 and 68 associated with the Number 2 and Number 3 engines 32 and 34.

Except as discussed hereinafter, the mechanical details of the four hydraulic power supplies 64, 66, 68, and 70 of airplane 20 are not germane as far as the present invention is concerned. Therefore, such non-essential details will not be described herein.

Referring still to the drawing, FIG. 2 shows which hydraulic systems of airplane 20 are supplied with operating fluid from each of the four hydraulic power supplies 64, 66, 68, and 70. As was suggested above and as will be pointed out in detail below, each of those systems which are essential to the safe operation of airplane 20 draw hydraulic fluid from two hydraulic power supplies. Thus, airplane 20 can continue to operate normally if one of those hydraulic power supplies goes down.

In particular, and as shown in FIG. 2, power supply 64 serves: two autopilots 128 and 130 provided to operate wing-mounted control surfaces of airplane 20; the left outboard and left inboard ailerons 56L and 54L; the Numbers 2, 3, 10, and 11 outboard and inboard spoilers 60 and 58; the inboard flaps 52; the mechanisms 131 and 132 for steering and for retracting nose gear 48; one of three rollout guidance servos 133; the left outboard elevator 62L; and elevator autopilot 134.

Also, hydraulic power supply 64 serves the steering mechanism 135 for the main landing gear 46; the mechanism 136 for retracting that gear; an alternate braking system 137 which is employed to stop aircraft 20 if the main braking system fails; the upper rudder 63 of the aircraft; and left inboard elevator 61L.

Referring still to FIG. 2, the hydraulic power supply 66 associated with Number 2 engine 32 serves: the right wing central control actuator or autopilot 130, the left outboard and right inboard ailerons 56L and 54R, and left inboard elevator 61L. This provides redundancy, ensuring that the foregoing essential control surfaces and autopilot 130 can still he operated if one of the two hydraulic systems 64 or 66 should fail.

The hydraulic system 66 driven by Number 2 engine 32 also serves Numbers 2, 3, 10, and 11, outboard and inboard spoilers 60 and 58 and the alternate brake system 137. As will become apparent below, airplane 20 also has a main hydraulic braking system supplied with fluid from Number 1 engine associated hydraulic power supply 70. And, as hydraulic power supplies 64 and 66 independently service an alternate brake system, airplane 20 in effect has three independent braking systems.

In addition to providing the services just discussed, hydraulic power supply 66 also provides operating fluid for the right rollout guidance autopilot 138, the lower rudder of airplane 20, the right elevator autopilot 140, stabilizer trim system 141, and a "normal elevator feel" system 142. This system is employed to change the force required to move elevators 62 and 61 so that the pressure which the pilot must exert to control the pitch of the aircraft will not become unduly light or unduly heavy as the pitch of the aircraft changes.

Referring still to FIG. 2, the hydraulic power supply 68 associated with Number 3 engine 34 serves the left central control actuator or autopilot 143; the right outboard aileron 56R; the left inboard aileron 54L; Nos. 1, 4, 9, and 12, outboard and inboard spoilers 60 and 58; the left rollout guidance servo 144; upper rudder 63; the right inboard elevator 61R; stablizer trim and feel control systems 141 and 142; and the left elevator autopilot servo 146.

It will be appreciated from FIG. 2 that hydraulic power supply 68 also contributes to the redundancy desired for safe operation of airplane 20. In this case redundancy of hydraulic fluid supply is provided in conjunction with hydraulic power supplies 64 and 66 for the left inboard aileron 54L, the upper rudder 62, and the stabilizer trim and elevator feel control systems 141 and 142.

As discussed above, the fourth of the hydraulic power supplies with which airplane 20 is equipped is that identified in FIG. 2 by reference character 70. That power supply is associated with the Number 4 engine 36.

Hydraulic power supply 70 serves the left central control actuator or autopilot 143, the right inboard and outboard ailerons 54R and 56R, the Nos. 5, 6, 7, and 8 outboard and inboard spoilers 60 and 58, the outboard trailing edge flaps 50, the system 136 for retracting the wing-supported landing gear 47, the primary or normal braking system 150, the lower rudder, and the right inboard and outboard elevators 61R and 62R.

Hydraulic power supply 70 provides redundancy in conjunction with hydraulic power supplies 66 and 68 for the left central control actuator 143, the right inboard and outboard ailerons 54R and 56R, the lower rudder, and the right inboard elevator 61R.

Thus, in the manner discussed above, the supply of operating fluid is duplicated for each of those hydraulically operated control surfaces and autopilots considered essential to the safe operation of airplane 20.

Reference was above made to three rollout guidance autopilots 133, 138, and 144. These are engaged during landing, typically when airplane 20 is about five feet above the runway, to keep the airplane traveling in a straight line after it touches down.

Referring now to FIG. 6, each of the four, above discussed hydraulic power supply systems 64, 66, 68, and 70 also includes a solid state monitoring and control unit. A typical unit along with the features which are optional and peculiar to different ones of the hydraulic power supplies 64...70 is shown in FIG. 6 and identified by reference character 152.

Each of the four control/monitoring units includes a hydraulic interface module or solid state controller 154. The four modules are identical. As discussed above, they can be programmed to perform the specific functions necessitated by the hydraulic power suppies in which they are incorporated by employing specific input and outputs of the self-contained cards on which the control and monitoring logic is provided.

The outputs from each hydraulic interface module 154 are connected to the engine driven pump 72 and the demand pump 80 of the hydraulic power supply in which the interface module is incorporated and to the auxiliary pump 82 of the hydraulic power supply if that particular power supply is equipped with an auxiliary pump. Additional outputs from the hydraulic interface module lead to a cockpit hydraulic panel 156 (see also FIG. 3).

Still other outputs are connected through an ARINC 429 digital data bus 158 and an EIU (electrical interface unit) 160 to a central maintenance computer 162 and an EICAS (engine indicating and crew alerting system) CRT 164 (see also FIG. 4).

Also incorporated in each of the four control/monitoring units 152 of hydraulic power supplies 64...70 is an on/off or select switch S166 (EDP select switch) for the engine driven pump 72 of the power supply in which the control/monitoring unit 152 is included (see also FIG. 3). This switch is normally left in the ON position but can be displaced to 0FF by the pilot to shut down the engine driven pump 72 if circumstances warrant. Also, engine driven pump 72 which is controlled by this switch is automatically transferred from ON to 0FF in the event of an engine fire to prevent hydraulic fluid -- spilled from a ruptured line, for example -- from feeding that fire.

More specifically, if an engine fire occurs, the pilot can actuate an engine fire switch S168. One of the results of closing this switch is that the engine driven pump 72 of that hydraulic power supply 64...70 associated with the overheated engine is thereby caused to shut down. At the same time, a normally open supply shutoff valve 170 in the line 172 between the hydraulic fluid reservoir 73 and the engine driven pump 72 of the involved hydraulic power supply (see FIG. 5) is closed to keep any hydraulic fluid that may escape from feeding an engine fire.

It will be noted from FIG. 6 that switch S168 has two positions to which it can be displaced in the event of a fire. This is provided so that first one and then the second of two independent fire extinguishing systems (not shown) can be activated by the flight deck crew. Throwing switch S168 to either the FIRE A position or the FIRE B position causes the associated supply shut-off valve 170 to close and causes the engine driven pump 72 of the involved hydraulic power supply 64...70 to be shut down.

Another pilot-operated switch incorporated in control/monitoring unit 152 is identified by reference character S174 in FIGS. 3 and 6. This demand pump control switch is employed to: start up and shut down the demand pump 80 of the hydraulic power supply 64, 66, 68, or 70 in which the unit 152 is incorporated at the option of the flight deck crew; to provide for the normal, automatic startup and shutdown of that pump in the face of a predicted increased demand for hydraulic fluid that cannot be supplied solely by the engine driven pump 72 or if the engine with which a particular power supply is associated fails or is shut down by cutting off its fuel supply; and to start up and shut down the auxiliary pump 82 if the hydraulic power supply in which a particular unit 152 is incorporated has a pump of that character.

As shown in FIG. 6, supply shutoff valve 170, the engine fire switch S168, and the EDP select switch S172 for demand pump 80 all have inputs to hydraulic interface module 154.

Another input to that module is from air/ground logic 176 (normally activated only in those control/monitoring units 152 incorporated in the Number 1 and Number 4 engine associated hydraulic power supplies 64 and 70). This logic identifies whether airplane 20 is in the air or on the ground. This is required because different systems are enabled when airplane 20 is flying and when it is on the ground.

The next input to hydraulic interface module 154 (also provided only in those control/monitor units 152 associated with the Number 1 and Number 4 engine associated hydraulic power supplies 64 and 70) provides a flap position indication from a trailing edge flap control unit position switch S178. This indication is whether the flaps are: (a) at a zero degree setting, or (b) down and consequently have a greater than zero degree angle of attack. This input is employed when airplane 20 is on the ground and the outboard and inboard flaps 50 and 52 are lowered to insure that the operation of the flaps does not cause the pressure on the hydraulic fluid available to the hydraulic systems of airplane 20 to droop.

The input just described is activated only in those hydraulic interface modules 152 of Number 1 and Number 4 engine associated hydraulic power supplies 64 and 70. This is because only those two hydraulic power supplies service the outboard and inboard flaps 50 and 52 of airplane 20.

Next to provide an input to each hydraulic interface module 154 is a demand pump run switch S180 and a demand pump pressure switch S182 which is located in the pressure module 84 of the hydraulic power supply 64...70 (see, also, FIG. 5). The demand pump run switch provides an indication of whether the demand pump 80 of each hydraulic power supply 64...70 is running or shut down, and the pressure switch S184 indicates whether the pressure on the hydraulic fluid available to the various hydraulic systems of airplane 20 is greater than or less 9,66 MPa (1400 psi) or some other designated, minimum, safe pressure.

A related input, engine driven pump pressure switch S184 provides an indication of whether the delivery pressure of engine driven pump 72 is above or below 9,66 MPa (1400 psi) or another pressure level deemed the minimum for the safe operation of airplane 20.

The next input to hydraulic interface module 154, again employed only in those control/monitoring units 152 in the Number 1 and Number 4 hydraulic power supplies 64 and 70, indicates whether the trailing edge flaps 50 and 52 of airplane 20 are stationary or about to become in transit (i.e., to be moved). The unit providing this input is identified in FIG. 6 by reference character 186. This input, like that indicative of flap position, is provided for only the Number 1 and Number 4 engine associated hydraulic power supplies 64 and 70. This is because, as discussed above, only those two hydraulic power supplies service the aircraft's inboard flaps 52 (hydraulic power supply 64) and outboard flaps 50 (hydraulic power supply 70).

A predictive input indicating that the flaps 50 and 52 are about to be moved is important because this ensures that the capacity needed to prevent a sudden hydraulic fluid pressure drop will be available when the flaps are first actually moved.

So that demand pumps 80 of hydraulic power supplies 64 and 70 will operate in a predictive manner, it is actually the difference in position between the flap-operating lever and the flaps, which is indicative of an ensuing demand for increased capacity rather than the flap motion as such, that is employed as an input to start up the appropriate demand pump 80.

Another important instance in which the demand pumps 80 of hydraulic power supplies are automatically started up with demand pump control switch S174 in the AUTO position is in the event of an engine fire and the consequent shutdown of the associated engine driven pump 72 of the involved hydraulic system 64...70. In this circumstance, the demand pump 80 of the involved system is automatically started up to make available the pressurized hydraulic fluid needed for continued safe operation of airplane 20.

Another to each hydraulic interface module input identified by reference character 188 in FIG. 6, indicates that it is connected to an external power source when it is on the ground. The control/monitoring unit 152 of the Number 4 engine associated hydraulic power supply 70 is equipped with a ground handling, electrical bus input 188; and the Number 1 engine associated system 64 also will be if that power supply is optionally equipped with an auxiliary pump 82.

The next input to each of the control/monitoring units 152 is from a pressure transmitter 190 (see also FIG. 5) on the output (or supply) line 78 from each of the hydraulic power supplies 64...70. This input is indicative of the pressure on the hydraulic fluid supplied to the various operating systems of airplane 20; i.e., those utilized to operate its control surfaces and brakes and to raise its main, wing, and nose gear and to steer its main landing gear and nose landing gear.

An input to each hydraulic interface module is also provided from a pressure switch 194 (see FIGS. 5 and 6). This switch indicates whether the reservoir pressure in air pressurization module 77 is above or below 21 psi or some other selected pressure and, consequently, whether the pneumatic head wanted for effective operation is present on hydraulic fluid reservoir 73.

The case drain module 112 discussed above is equipped with a sensor 195 which detects the maximum hydraulic fluid temperature in each of the four hydraulic power supplies 64...70; i.e., the temperature of hydraulic fluid drained from the pumps 72 and 80 (and 82 if present) of the hydraulic systems to cool that fluid and thereby keep that fluid and the mechanical components of the hydraulic power supplies from being overheated. This temperature sensor also provides an input to the hydraulic interface module 154 of each power supply 64...70.

As shown in FIG. 6, two inputs from the case drain module temperature sensor 195 can optionally be provided. This option is employed for ease of case drain module temperature verification as determining that the case drain module temperature is high or that the temperature sensor has instead failed can otherwise be a tedious, potentially dangerous task.

The final input to the hydraulic interface module is from a fuel cut-off actuator 196. This input indicates whether the flow of fuel to an engine 30...36 with which a particular control/monitoring unit 152 is associated is cut off or, if fuel is flowing to that engine, whether it is doing so in a normal "run" mixture or in a "rich" mixture (typically employed in starting up the engine). This input is provided so that the demand pump 80 of a hydraulic power supply 64...70 associated with a particular engine can be automatically started up if that engine is shut down during flight. In that case, the output from the engine driven pump 72 of the involved hydraulic power supply may be non-existent and will typically not be adequate to meet the needs of the aircraft's hydraulic systems, even if the engine is windmilling and the engine driven pump is therefore being operated at partial capacity.

It will be apparent to the reader from the foregoing that the control over the engine driven and demand pumps 72 and 80 (and auxiliary pump 82 if present) of each hydraulic power supply 64...70 is exercised, be it automatically or by the pilot, by way of the hydraulic interface module 154 incorporated in the involved hydraulic power supply.

I also pointed out above that each hydraulic interface module 154 has outputs which keep the flight deck crew of airplane 20 continuously advised of the status of each hydraulic power supply 64...70.

Furthermore, I pointed out above that the hydraulic interface module 154 of each hydraulic power supply 64...70 has outputs which operate those hydraulic panel annunciators indicative of hydraulic power supply system status. Three annunciators 200, 202, and 204 are provided for each of the hydraulic power supplies. Each of these lights amber if a condition warranting the attention of the flight deck crew arises.

Specifically, an annunciator 200 is illuminated if a fault is detected in the involved hydraulic power supply 64...70. These faults are overheating, low system pressure, and low hydraulic fluid level.

Similarly, a pressure annunciator 202 is illuminated if the pressure on the output from the associated demand pump 80 drops below a safe level; and an annunciator 204 is illuminated if the output pressure from the associated engine driven pump 72 drops below a specified, safe level.

It was also pointed out above that outputs from each hydraulic interface module are employed to operate an EICAS 164 with a CRT (cathode ray tube) or other display. That display is also located on the flight deck 24 of airplane 20. As is shown in FIG. 4, the information continuously displayed and updated in real time on EICAS display 164 for each of the hydraulic power supplies 64...70 includes: the quantity of hydraulic fluid in that system, the temperature of that fluid, and the pressure on it.

Finally, it is to be noted that the central maintenance computer 162 which processes information significant to maintenance personnel is connected back to each of the four hydraulic interface modules 154. Each hydraulic interface module 154 is thereby enabled to store failure information for ten flight legs to facilitate fault isolation and repair of failed components.

The hydraulic interface module 154 of the control/monitoring unit 152 for the Number 4 engine associated hydraulic power supply 70 makes maximum use of the capabilities of the logic afforded by a hydraulic interface module as disclosed herein. This logic, selected as discussed above by employing appropriate module inputs and outputs, is shown in FIG. 7 in which the hydraulic interface module is identified by reference character 154-4.

As shown in FIG. 7 and as discussed above, hydraulic interface module 154-4 is employed: to control the operation of the demand and auxiliary pumps 80 and 82 of the Number 4 engine associated hydraulic power supply 70; to illuminate the demand pump low pressure annunciator 202, the engine driven pump low pressure annunciator 204, and the system fault light 200 of hydraulic power supply system 70 as and when appropriate; and to furnish to EIU interface 160 the data needed to: (a) display on EICAS 164 a continually updated report on the status of the hydraulic power supply, and (b) furnish problem related information to central maintenance computer 162.

In addition, although not strictly part of hydraulic interface module 154-4, the card 206 containing the logic for that module also includes: the logic for controlling the operation of the engine driven pump 72 of Number 4 engine associated hydraulic power supply 70 and the logic which causes a brake source warning light 208 located in the cockpit 24 of airplane 20 to be illuminated when the hydraulic pressure in both the main and alternate brake systems falls below a designated, typically 9,66 MPa (1400 psi), level pressure.

In conjunction with the latter functions, <9,66 MPA (<1400 PSI) outputs of hydraulic power supply system pressure switch S194 and alternate brake pressure switch S210 are connected through an AND gate 212 to brake source warning light 208, and that light will accordingly be illuminated as indicated above if the pressure in both the main and alternate brake systems falls below 9,66 MPa (1400 psi). With the pressure in either the alternate or main systems (or all systems) above that level, the brake source warning light 208 will remain off; and the flight crew will thereby be advised that at least one of the brake systems has sufficient pressure to safely slow down (or stop) airplane 20 after it lands.

As far as the control of the engine driven pump 72 of hydraulic power supply 70 is concerned, FIG. 7 shows that, as discussed above, the engine driven pump will run as long as Number 4 engine 36 is operating provided that: (a) the pilot has thrown the engine driven pump control or select switch S166 to the ON position, and (b) engine fire switch S168 is in one of its normal positions. This mode of operation is obtained by connecting the ON output from switch S166 and the NORMAL output from engine fire switch S168 to the engine driven pump through an AND gate 214. Conversely, if the pilot throws engine driven pump switch S166 to the OFF position or engine fire switch S168 to a FIRE position, AND gate 214 will become nonconductive; and engine driven pump 72 will be shut down.

As discussed above, there are a number of circumstances in which the demand pump 80 of Number 4 engine associated hydraulic power supply 70 is run to keep the pressure on the hydraulic fluid supplied by system 70 from drooping. Specifically, that pump can be caused to operate continuously at the option of the aircraft pilot because the ON output of demand pump select switch S174 is connected directly to pump 80 through OR gate 216.

The demand pump 80 of hydraulic power supply 70 is also started up (automatically) prior to take-off of airplane 20 if switch S174 is in the AUTO position and if the flap operating lever (not shown) of airplane 20 is displaced to initiate the lowering of inboard and outboard flaps 52 and 50. To this end, the IN TRANSIT output of flap control unit 186 and the AUTO output of demand pump control switch S174 are connected through an AND gate 218, a second OR gate 220, and the above-mentioned OR gate 216 to demand pump 80. On take-off, demand pump 80 runs continuously until the wings 26 and 28 of airplane 20 are cleaned up; i.e., until inboard and outboard flaps 52 have been retracted and the IN TRANSIT signal from flap control unit 186 disappears and AND gate 218 therefore becomes inactive.

The demand pump 80 of Number 4 engine hydraulic power supply 70 is also run continuously during landing and then deactivated after a ten second delay if demand pump control switch S174 is in the AUTO position and either: (1) the flaps 50 and 52 of airplane 20 are not down (i.e., in a greater than zero degree position), or (2) air/ground logic 176 indicates that airplane 20 is on the ground. To accommodate this mode of operation, flap position switch S178 output >0° and the AIR output of air/ground logic 176 are connected through AND gate 222 to a timer 224. When AND gate 222 loses either input, timer 224 begins to count down; and AND gate 228 thereby becomes conductive and remains so for the ten seconds or other period for which the timer is set. With input 226 active, demand pump control switch S174 thrown to the AUTO position, and AND gate 228 conductive, the AND gate output is coupled through OR gates 220 and 216 to demand pump 80, causing the latter to run.

The scheme just described ensures that adequate hydraulic service is available to supply the hydraulic systems typically operated at the same time during landing such as ground spoilers, rudders, thrust reversers, and brakes. Typically, this high demand will last for not longer than about three seconds; and the timer 224 therefore shuts down demand pump 80 only after this interval plus a safety margin (equalling ten seconds) has elapsed.

As suggested above, demand pump 80 is operated only once during take-off and once during landing rather than being cycled on and off as is typically the case in the operation of currently flying airplanes equipped with comparable pumps. This reduces the wear on those pumps (and other hydraulic power supply components). The resulting increase in service life is important because suitable pumps are expensive and because the replacement of those pumps is a time consuming task.

Next, the demand pump 80 of engine Number 4 associated hydraulic power supply 70 will also be started up automatically if: the pressure on the hydraulic fluid supplied by the Number 4 engine driven pump 72 falls below a designated level, typically 9,66 MPa (1400 psi), and demand pump control switch S174 is in the AUTO position. This keeps the pressure on the hydraulic fluid available to the operating systems of airplane 20 at a safe level and is accomplished by connecting the <9,66 MPA (<1400 PSI) output from engine driven pump pressure switch S184 and the AUTO output from demand pump control switch S174 to the inputs of an AND gate 230. The output of gate 230 is connected to a timer 232 which is typically set for a 14 second run time and which has an output connected to demand pump 80.

Typically, an increased demand on one or more of the four hydraulic power supplies 64...70 of airplane 20 resulting in the hydraulic pressure falling below 9,66 MPa (1400 psi) results from an emergency maneuver such as a diving hard turn. Generally, such demands can be satisfied by operating the demand pump 80 of the involved system for a brief period or, if necesary, for more than one such duty period. Timer 232 satisfies the objective of providing adequate hydraulic power in the unlikely event of such an occurrence.

As indicated in FIG. 7, a delay, typically 0.3 seconds, is also programmed into timer 232. The 0.3 second delay accommodates transients and anomalies in the pressure on the hydraulic fluid supplied by Number 4 engine associated hydraulic power supply 70. Absent that feature, the demand pump 80 might be started up in circumstances in which there was no actual demand for increased hydraulic service. That would also cause unnecessary wear of the hydraulic power supply components.

Finally, demand pump 80 of hydraulic power supply 70 is automatically started up to ensure continued safe operation of airplane 20 during flight if demand pump control switch S174 is in the AUTO position and fuel cut-off actuator 196 is moved to its OFF position to shut down engine Number 4, thereby also shutting down the engine driven pump 72 of hydraulic power supply 70. To this end, the AUTO output of demand pump control switch S174 and the CUT-OFF output of fuel cut-off actuator 196 are connected to an AND gate 234: and the output of the latter is connected through OR gates 220 and 216 to demand pump 80.

Referring still to FIG. 7, if demand pump control switch S174 is moved to one of its positions other than the ON and AUTO positions discussed above --i.e., to OFF or AUX -- an OR gate 236 will become conductive. This has two results. One is that the demand pump low pressure light or annunciator 202 for hydraulic power supply 70 in aircraft flight deck hydraulic panel 156 will be illuminated. In addition, a signal will be transmitted to EIU interface 160; and this signal, combined with other information, will be processed to provide the hydraulic pressure reading continuously displayed by EICAS 164.

A signal indicating a low pressure output from demand pump 80 of hydraulic power supply 70 is also transmitted to EIU interface 160 after a two second delay if: (1) demand pump run switch S180 is in the RUN position, and the output pressure from demand pump 80 is less than 9,66 MPa (1400 psi) as indicated by demand pump pressure switch S182, or (2) both the demand pump pressure switch S182 and the engine driven pump pressure switch S184 indicate that the outputs from the demand and engine driven pumps 80 and 72 both have a pressure of less than 9,66 MPa (1400 psi).

In the first of these circumstances, the flight deck crew is made aware from EICAS 164 that a demand pump 80 of an involved hydraulic power supply 64...70 is running but that the output pressure is below the minimum required for safe operation of airplane 20. The EICAS-displayed information in the second of the related circumstances makes the crew aware that, whether or not a demand pump 80 is running, the hydraulic pressure on the fluid available from the involved hydraulic power supply 64...70 is below the 9,66 MPa (1400 psi) or other minimum level determined to be necessary for safe operation of airplane 20.

The hydraulic interface module functions just described are provided by connecting the RUN output of switch S180 and the <9,66 MPA (<1400 PSI) output of switch S182 to the inputs of an AND gate 238; by connecting the latter output and the <9,66 MPA (<1400 PSI) output of engine driven pump pressure switch S184 to an AND gate 240; by connecting the outputs of AND gates 238 and 240 to an OR gate 242; and by connecting the output of the latter through a timer 244 with a two second duration and OR gate 236 to EIU interface 160.

Demand pump 80 may require as long as two seconds to come up to the speed needed for it to produce a greater than 1400 PSI hydraulic fluid output. Timer 244, by providing a two second delay before transmitting "low pressure" information to EIU 160, therefore keeps EICAS 164 from indicating that a demand pump 80 is operating at low pressure while that pump is instead simply coming up to speed.

In addition to forwarding "low pressure" information to EIU 160, if either of the foregoing combinations of indications indicative of low demand pump pressure pump arise, the demand pump low pressure light or annunciator 202 for the Number 4 engine associated hydraulic power supply 70 will be illuminated. This occurs because the output of OR gate 236 is also connected to that flight deck-located annunciator.

Referring still to FIG. 7, the pressure switch S184 for the engine driven pump 72 of hydraulic power supply 70 is also connected through a separate delay timer 246 with a two second cycle to the EIU 160 and to the engine driven pump low pressure light or annunciator 204 for power supply 70 on the flight deck 24 of airplane 20. The low pressure annunciator 204 for system 70 is consequently illuminated and "low pressure" information transmitted to EIU 160 if the output pressure from engine driven pump 72 remains below the typical "safe" level of 1400 psi for more than two seconds. This period is adequate for the pump to come up to speed or for other anomalies in the output from pump 72 to be resolved.

Similarly, the 8,28 MPA (<1200 PSI) output from the pressure transmitter 190 of hydraulic power supply 70 is connected through a third delay timer 248 with a two second cycle to the system fault light or annunciator 200 in flight deck hydraulic panel 156 and to EIU 160. Thus, if the pressure on the hydraulic fluid available from the Number 4 engine associated hydraulic power supply 70 remains below 8,28 MPa (1200 psi) for more than two seconds (a period also provided to resolve anomalies), the system fault light or annunciator 200 for that hydraulic power supply will be illuminated; and information indicating that a fault has developed in power supply 70 will be forwarded to EIU 160.

In conjunction with the foregoing, the reader is reminded that the information generated in EIU 160 and forwarded to EICAS 164 is also forwarded to central maintenance computer 162, as appropriate, so that any problems detected in the operation of airplane 20 can be corrected by maintenance personnel.

As is suggested above, the increased demand for hydraulic service can normally be satisfied by turning the involved demand pump 80 on for 10 second intervals when the flaps 52 and 50 of airplane 20 are down or for 14 seconds in case the delivery pressure of the associated engine driven pump 72 goes below 9,66 MPa (1400 psi). In contrast, if the involved demand pump 80 is started up by fuel cut-off actuator 196 having been moved to its CUT-OFF position, the involved demand pump 80 is caused to run continuously because the assoicated engine driven pump 72 shuts down; and demand pump 80 is therefore required to operate continuously in order to provide the hydraulic service required for the continued, safe operation of airplane 20.

As discussed above, the hydraulic interface module 154 for Number 4 engine associated hydraulic power supply 70 is also employed in starting up and shutting down the electrically driven auxiliary pump 82 of that system. This is accomplished by way of an AND gate 250. One input to AND gate 250 is from the ON output of ground power source (or handling) bus 188. A second input to AND gate 250 is from AND gate 240. That gate becomes conductive when the output pressure from the demand pump 80 and the output pressure from the engine driven pump 72 of hydraulic power supply 70 are both below 9,66 MPa (1400 psi). The third requirement for AND gate 250 to become conductive is for demand pump control switch S174 to be in the AUX position. With the foregoing conditions satisfied, AND gate 250 becomes conductive; and auxiliary pump 82 runs.

Referring now primarily to FIG. 8, the hydraulic interface module logic 154-3 for the Number 3 engine associated hydraulic power supply 68 differs from the just-described hydraulic interface module 154-4 logic primarily in that: it has no trailing edge flap position or motion inputs because flaps 50 and 52 are not serviced by hydraulic power supply 68; no inputs respecting brake system pressure are activated because brakes are similarly not serviced by power supply 68; and only a three-position demand pump control switch S174-3 is employed because hydraulic power supply 68 does not have an auxiliary pump. Switch S174-3 consequently does not require an AUX position.

The hydraulic interface module 154-2 (FIG. 9) for the Number 2 engine associated hydraulic power supply 66 is essentially a duplicate of hydraulic interface module 154-3. An exception is that there is a two second delay between the time an appropriate signal is generated and demand pump 80 is actually started up in the case of hydraulic interface module 154-3 and only a 0.3 second delay in the same circumstances in the Number 2 engine associated hydraulic power supply 66. In the basic configuration of airplane 20, in which the demand pumps 80 of hydraulic power supplies 66 and 68 are electrically driven, this keeps the two demand pumps 80 from coming on simultaneously and perhaps thereby overloading the electrical system of airplane 20. This could occur in the absence of a staggered delay in the event of a momentary loss of power due to a lightning strike, the pilot switching from one electrical bus to another, etc.

The just described delays are provided by timers 252-3 and 254-3 (and 252-2 and 254-3). Timers 252 are located between the demand pump control switch ON outputs and OR gates 216. Timers 254 are located between the AUTO outputs of the demand pump control switches S174-2 and S174-3 and the AND gates 234 of hydraulic interface modules 154-2 and 154-3.

Also, in the hydraulic interface modules 154-2 and 154-3 of hydraulic power supplies 66 and 68, OR gates 220 are programmed out. The outputs from demand pump control switch timers 152 and the outputs from AND gates 234 are inputted to OR gates 216. Thus, as indicated above, the demand pumps 80 of hydraulic power supplies 66 and/or 68 will be turned on: (a) after a staggered time delay with the associated demand pump control switch or switches S174-2 and S174-3 in the ON position, or (b) after a similar delay with the foregoing switch(es) in the AUTO position and fuel cut-off actuator 196 moved to the CUT-OFF position.

The illustrated hydraulic interface module 154-1 for the hydraulic power supply 64 associated with Number 1 engine 30 is, essentially, a duplicate of the hydraulic interface module 154-4 for the Number 4 engine associated hydraulic power supply 70 except that the logic employed in hydraulic interface module 154-1 does not provide control for an electrically driven auxiliary pump 82 or an AUX position on demand pump control switch S174-1 unless the option to include an auxiliary pump in hydraulic power supply system 64 is exercised.

The present embodiments are to be considered in all respects as illustrative and not restrictive, the scope of the invention being indicated by the appended claims rather than by the foregoing description.

## Claims

1. An onboard hydraulic power supply (64-70) for making pressurized hydraulic fluid available to at least one hydraulically operated device (46-63,128-146) of an aircraft (20), said power supply (64-70) comprising a plurality of pumps (72,80,82) which provide pressurized hydraulic fluid for the operation of said device (46-63,128-146), manually operable control means (166,168,174) for enabling and disenabling said pumps (72,80,82), sensor means (176-195) for sensing the operational status of said hydraulic power supply (64-70) and display means (156,164) mounted on the flight deck (24) of said aircraft (20) for displaying information relating to said operational status, **characterized by** a centralized solid state controller (152) interconnecting said control means (166,168,174), said sensor means (176-195), said pumps (72,80,82) and said display means (156,164), inputs from said control means (166,168,174) and said sensor means (176-195) being routed to said controller (152) and said controller (152) comprising a self-contained card (154) possessing all of the logic necessary for generating outputs to control said pumps (72,80,82) and to continually make available said information to said display means (156,164).

2. The hydraulic power supply (64-70) as defined in claim 1, **characterized by** means (160,162) for processing information made available from said solid state controller (152) and relating to problems in said hydraulic power supply (64-70) that require the attention of maintenance personel.

3. The hydraulic power supply (64-70) as defined in claim 1 or 2, **characterized in** that said plurality of pumps (72,80,82) comprises a first, engine driven pump (72) and a second, demand pump (80), and said solid state controller (152) comprises means (222,228,234,220,230,216) for automatically activating said demand pump (80) upon an increase in demand to prevent precipitous drops in the hydraulic fluid delivery pressure.

4. The hydraulic power supply (64-70) as defined in claim 3, **characterized in that** said solid state controller (152) comprises means responsive to said inputs from said sensor means (176-195) for predicting an increase in demand, and means (218,220,216) for automatically activating said demand pump (80) upon said predicted increase in demand.

**5.** The hydraulic power supply (64-70) as defined in claim 3 or 4, **characterized in that** said solid state controller (152) includes means (222,228,220,216) for effecting operation of said demand pump (80) while the aircraft (20) is airborne and the flaps (50,52) of the aircraft (20) are down, and means (218,220,216) for effecting operation of said pump (80) upon the receipt of a signal (IN TRANSIT) indicative of the imminent movement of said flaps (50,52).

**6.** The hydraulic power supply (64-70) as defined in any one of claims 3-5, **characterized in that** said solid state controller (152) has means (224,232) which are effective to shut down said demand pump (80) after that pump (80) has run for a period of selected duration.

**7.** The hydraulic power supply (64-70) as defined in claim 6, **characterized in that** said solid state controller (152) has means (224) which are effective to cause said demand pump to shut down following the touchdown of the aircraft (20) and the subsequent lapse of a specified time period.

**8.** The hydraulic power supply (64-70) as defined in any one of claims 3-7, **characterized in** that said solid state controller (152) include means (232) for delaying the start-up of said demand pump (80) for a predetermined period after the receipt of an input indicative of an increased demand on the hydraulic power supply (64-70), thereby preventing transient anomalies in the pressure on the hydraulic fluid from effecting a start-up of said demand pump (80).

**9.** The hydraulic power supply (64-70) as defined in any one of claims 3-8, **characterized in that** said solid state controller (152) comprises means for automatically effecting start-up of said demand pump (80) in the event of an occurence which results in the shutdown of the first, engine driven pump (72) while the aircraft (20) is operating.

**10.** The hydraulic power supply (64-70) as defined in any one of claims 3-9, **characterized in that** said solid state controller (152) comprises means (234,220,216) for effecting the start-up of said demand pump (80) upon receipt of an input indicating that a fuel cut-off actuator (196) has been so actuated as to cut off the supply of fuel to the engine (30-36) driving said engine driven pump (72).

**11.** The hydraulic power supply (64-70) as defined in anyone of the preceding claims, **characterized in that** said plurality of pumps (72,80,82) further comprises a third, auxiliary pump (82) which is operable independently of the aircraft engine (30-36), and said solid state controller (152) includes means for disenabling said auxiliary pump (82) when said aircraft engine (30-36) is running.

**12.** The hydraulic power supply (64-70) as defined in claim 11, **characterized in that** said solid state controller (152) has means (250) for effecting the start-up of said pumps only if an external power supply (188) for said third pump (82) is operatively connected thereto.

**13.** The hydraulic power supply (64-70) as defined in anyone of claims 3-12, **characterized by** means (200-204) activated from said solid state controller (152) for warning the flight deck crew that: (a) the pressure on the hydraulic fluid made availabe by the engine driven pump (72) has fallen below a specified minimum, (b) the pressure on the hydraulic fluid made available by the demand pump (80) has fallen below a specified minimum, and/or (c) there is a fault in the hydraulic power supply (64-70).

**14.** The hydraulic power supply (64-70) as defined in any one of the preceding claims**, characterized in that** said information made available by said solid state controller (152) relates to the quantity of the hydraulic fluid in the system, the temperature of the hydraulic fluid, and the pressure on said fluid.

**15.** The hydraulic power supply (64-70) as defined in any one of the preceding claims, **characterized by** a pilot-operated switch (168) for disenabling said pumps (72,80,82) if a fire breaks out in said aircraft (20) in a location such that the fire could be fueled by hydraulic fluid escaping from said hydraulic power supply (64-70).

**16.** The hydraulic power supply (64-70) as defined in any one of the preceding claims, **characterized in that** said solid state controller (152) includes means (212) for activating a signal (208) in the cockpit or on the flight deck (24) of said aircraft (20) if the hydraulic pressure in all braking systems (137,150) with which said aircraft (20) is equipped falls below a specified level.

**17.** An aircraft (20), equipped with at least one hydraulic power supply (64-70) as defined in any one of the preceding claims.

**18.** The aircraft (20) as defined in claim 17, **characterized by** a plurality of hydraulic power supplies (64-70), and at least one hydraulic device (46-63,128-146) which can be operated by fluid supplied by either one of two of said hydraulic power supplies (64-70).

**19.** The aircraft (20) as defined in claim 17 or 18, **characterized in that** there is a solid state controller (152) as aforesaid for each of said hydraulic power supplies (64-70), all of said solid state controllers (152) have the same logic, and said controllers (152) have selectively available inputs and outputs which can be employed to make each of said solid state controllers (152) capable of performing a selected part, or all, of the functions of which it is capable.

**20.** The aircraft (20) as defined in claim 18 or 19, **characterized in that** said pumps (72,80,82) of each of said hydraulic power supplies (64-70) includes a first, aircraft engine driven pump (72) and a second, electrically driven pump (80,82) which can be operated independently of the first, engine driven pump (72), and said solid state controllers (152) of each power supply (64-70) include means for preventing the electrically driven pumps (80,82) of the two hydraulic power suppplies (64-70) from being started up simultaneously, thereby keeping the electrical system of said aircraft (20) from being overloaded by the start-up of the electrically driven pumps (80,82).

## Patentansprüche

**1.** Bordeigene hydraulische Energieversorgung (64-70) zum Erzeugen von unter Druck stehendem hydraulischem Fluid, das für wenigstens eine hydraulisch betriebene Einrichtung (46-63, 128-146) eines Flugzeugs (20) verfügbar ist, wobei die Energieversorgung (64-70) eine Mehrzahl von Pumpen (72, 80, 82), welche unter Druck stehendes hydraulisches Fluid für den Betrieb der Einrichtung (46-63, 128-146) liefern, manuell betätigbare Steuermittel (166, 168, 174) zum Freigeben und Sperren der Pumpen (72, 80, 82), eine Sensoreinrichtung (176-195) zum Abfühlen des Betriebsstatus' der hydraulischen Energieversorgung (64-70) und eine auf dem Flugdeck (24) des Flugzeugs (20) angebrachte Sichtwiedergabeeinrichtung (156, 164) zur Sichtwiedergabe von Information, die sich auf den besagten Betriebsstatus bezieht, umfaßt, **gekennzeichnet** durch eine zentralisierte Festkörper-Steuer- bzw. -Regeleinrichtung (152), welche die Steuermittel (166, 168, 174), die Sensoreinrichtung (176-195), die Pumpen (72, 80, 82) und die Sichtwiedergabeeinrichtung (156, 164) miteinander verbindet, wobei Eingangsgrößen von den Steuermitteln (166, 168, 174) und der Sensoreinrichtung (176-195) zu der Steuer- bzw. Regeleinrichtung (152) geleitet werden, und wobei die Steuer- bzw. Regeleinrichtung (152) eine unabhängige Karte (154) umfaßt, welche die gesamte Logik besitzt, die zum Erzeugen von Ausgangsgrößen zum Steuern bzw. Regeln der Pumpen (72, 80, 82) und zum kontinuierlichen Verfügbarmachen der Information für die Sichtwiedergabeeinrichtung (156, 164) notwendig ist.

**2.** Hydraulische Energieversorgung (64-70) nach Anspruch 1, **gekennzeichnet** durch eine Einrichtung (160, 162) zum verarbeiten von Information, die von der Festkörper-Steuer- bzw. -Regeleinrichtung (152) verfügbar gemacht wird und sich auf Probleme in der hydraulischen Energieversorgung (64-70) bezieht, welche die Aufmerksamkeit des Wartungspersonals erfordern.

**3.** Hydraulische Energieversorgung (64-70) nach Anspruch 1 oder 2, dadurch **gekennzeichnet,** daß die Mehrzahl von Pumpen (72, 80, 82) eine erste, triebwerksgetriebene Pumpe (72) und eine zweite, Bedarfspumpe (80) umfaßt, und daß die Festkörper-Steuer- bzw. -Regeleinrichtung (152) eine Einrichtung (222, 228, 234, 220, 230, 216) zum automatischen Aktivieren der Bedarfspumpe (80) bei einer Erhöhung im Bedarf zum Verhindern von steilen Abfällen im hydraulischen Fluidabgabedruck umfaßt.

**4.** Hydraulische Energieversorgung (64-70) nach Anspruch 3, dadurch **gekennzeichnet,** daß die Festkörper-Steuer- bzw. -Regeleinrichtung (152) eine auf die Eingangsgrößen von der Sensoreinrichtung (176-195) ansprechende Einrichtung zum Vorhersagen einer Erhöhung im Bedarf, und eine Einrichtung (218, 220, 216) zum automatischen Aktivieren der Bedarfspumpe (80) bei dieser vorausgesagten Erhöhung im Bedarf umfaßt.

**5.** Hydraulische Energieversorgung (64-70) nach Anspruch 3 oder 4, dadurch **gekennzeichnet,** daß die Festkörper-Steuer- bzw. -Regeleinrichtung (152) eine Einrichtung (222, 228, 220, 216) zum Bewirken eines Betriebs der Bedarfspumpe (80), während das Flugzeug (20) in der Luft schwebt und die Klappen (50, 52) des Flugzeugs (20) unten sind, und eine Einrichtung (218, 220, 216) zum Bewirken eines Betriebs der besagten Pumpe (80) beim Empfang eines Signals (IN TRANSIT), welches die unmittelbar bevorstehende Bewegung der Klappen (50, 52) angibt, aufweist.

**6.** Hydraulische Energieversorgung (64-70) nach irgendeinem der Ansprüche 3 bis 5, dadurch **gekennzeichnet,** daß die Festkörper-Steuer- bzw. -Regeleinrichtung (152) eine Einrichtung (224, 232) hat, die dahingehend wirkt, daß sie die Bedarfspumpe (80) abstellt, nachdem diese Pumpe (80) während einer Zeitdauer von ausgewählter Dauer gelaufen ist.

**7.** Hydraulische Energieversorgung (64-70) nach Anspruch 6, dadurch **gekennzeichnet,** daß die Festkörper-Steuer- bzw. -Regeleinrichtung (152) eine Einrichtung (224) hat, welche dahingehend wirksam ist, daß sie das Abstellen der Bedarfspumpe folgend auf das Aufsetzen des Flugzeugs (20) und das nachfolgende vergehen einer spezifizierten Zeitdauer bewirkt.

**8.** Hydraulische Energieversorgung (64-70) nach irgendeinem der Ansprüche 3 bis 7, dadurch **gekennzeichnet,** daß die Festkörper-Steuer- bzw. -Regeleinrichtung (152) eine Einrichtung (232) zum Verzögern des Anlaufens der Bedarfspumpe (80) während einer vorbestimmten Zeitdauer nach dem Empfang einer Eingangsgröße, die einen erhöhten Bedarf für die hydraulische Energieversorgung (64-70) angibt, so daß dadurch Übergangsanomalien in dem Druck auf das hydraulische Fluid aus dem Bewirken eines Anlaufens der Bedarfspumpe (80) verhindert werden, umfaßt.

**9.** Hydraulische Energieversorgung (64-70) nach irgendeinem der Ansprüche 3 bis 8, dadurch **gekennzeichnet,** daß die Festkörper-Steuer- bzw. -Regeleinrichtung (152) eine Einrichtung zum automatischen Bewirken eines Anlaufens der Bedarfspumpe (80) in dem Fall eines Ereignisses, welches zum Abstellen der ersten, triebwerksgetriebenen Pumpe (72) führt, während das Flugzeug (20) in Betrieb ist, umfaßt.

**10.** Hydraulische Energieversorgung (64-70) nach irgendeinem der Ansprüche 3 bis 9, dadurch **gekennzeichnet,** daß die Festkörper-Steuer- bzw. -Regeleinrichtung (152) eine Einrichtung (234, 220, 216) zum Bewirken des Anlaufens der Bedarfspumpe (80) beim Empfang einer Eingangsgröße, welche angibt, daß ein Kraftstoffabsperrstellantrieb (196) so betätigt worden ist, daß er die Zufuhr von Kraftstoff zu dem Triebwerk (30-36) absperrt, welches die triebwerksgetriebene Pumpe (72) antreibt, umfaßt.

**11.** Hydraulische Energieversorgung (64-70) nach irgendeinem der vorhergehenden Ansprüche, dadurch **gekennzeichnet,** daß die Mehrzahl von Pumpen (72, 80, 82) weiter eine dritte, Hilfspumpe (82) umfaßt, welche unabhängig von dem Flugzeugtriebwerk (30-36) betreibbar ist, und daß die Festkörper-Steuer- bzw. -Regeleinrichtung (152) eine Einrichtung zum Sperren der Hilfspumpe (82), wenn das Flugzeugtriebwerk (30-36) läuft, umfaßt.

**12.** Hydraulische Energieversorgung (64-70) nach Anspruch 11, dadurch **gekennzeichnet,** daß die Festkörper-Steuer- bzw. -Regeleinrichtung (152) eine Einrichtung (250) zum Bewirken des Anlaufens der Pumpen nur dann, wenn eine äußere Energieversorgung (188) für die dritte Pumpe (82) betriebsmäßig damit verbunden ist, hat.

**13.** Hydraulische Energieversorgung (64-70) nach irgendeinem der Ansprüche 3-12, **gekennzeichnet** durch eine von der Festkörper-Steuer- bzw. -Regeleinrichtung (152) aktivierte Einrichtung (200-204) zum Warnen der Flugdeckmannschaft, daß: (a) der Druck auf das hydraulische Fluid, der durch die triebwerksgetriebene Pumpe (72) verfügbar gemacht wird, unter ein spezifiziertes Minimum gefallen ist, (b) der Druck auf das hydraulische Fluid, der von der Bedarfspumpe (80) verfügbar gemacht wird, unter ein spezifiziertes Minimum gefallen ist, und/oder (c) ein Fehler in der hydraulischen Energieversorgung (64-70) ist.

**14.** Hydraulische Energieversorgung (64-70) nach irgendeinem der vorhergehenden Ansprüche, dadurch **gekennzeichnet,** daß sich die von der Festkörper-Steuerbzw. -Regeleinrichtung (152) verfügbar gemachte Information auf die Menge des hydraulischen Fluids in dem System, die Temperatur des hydraulischen Fluids und den Druck auf das hydraulische Fluid bezieht.

**15.** Hydraulische Energieversorgung (64-70) nach irgendeinem der vorhergehenden Ansprüche, **gekennzeichnet** durch einen pilotenbetätigten Schalter (168) zum Sperren der Pumpen (72, 80, 82), wenn ein Feuer in dem Flugzeug (20) an einem solchen Ort ausbricht, daß das Feuer durch hydraulisches Fluid, welches aus der hydraulischen Energieversorgung (64-70) entkommt, mit Brennstoff gespeist werden könnte.

**16.** Hydraulische Energieversorgung (64-70) nach irgendeinem der vorhergehenden Ansprüche, dadurch **gekennzeichnet,** daß die Festkörper-Steuer- bzw. -Regeleinrichtung (152) eine Einrichtung (212) zum Aktivieren eines Signals (208) im Cockpit oder auf dem Flugdeck (24) des Flugzeugs (20), wenn der Hydraulikdruck in allen Bremssystemen (137, 150), mit denen das Flugzeug (20) ausgerüstet ist, unter ein spezifiziertes Niveau fällt, aufweist.

**17.** Flugzeug (20), das mit wenigstens einer hydraulischen Energieversorgung (64-70), wie sie in irgendeinem der vorhergehenden Ansprüche angegeben ist, ausgerüstet ist.

**18.** Flugzeug (20) nach Anspruch 17, **gekennzeichnet** durch eine Mehrzahl von hydraulischen Energieversorgungen (64-70), und wenigstens eine hydraulische Einrichtung (46-63, 128-146), welche durch Fluid betrieben werden kann, das von einer von zwei der hydraulischen Energieversorgungen (64-70) geliefert wird.

**19.** Flugzeug (20) nach Anspruch 17 oder 18, dadurch **gekennzeichnet,** daß eine Festkörper-Steuerbzw. -Regeleinrichtung (152), wie vorerwähnt, für jede der hydraulischen Energieversorgungen (64-70) vorhanden ist, wobei alle diese Festkörper-Steuer- bzw. -Regeleinrichtungen (152) die gleiche Logik haben, und wobei die Steuer- bzw. Regeleinrichtungen (152) wahlweise verfügbare Eingänge und Ausgänge haben, welche dazu angewandt werden können, jede der Festkörper-Steuer- bzw. -Regeleinrichtungen (152) fähig zu machen, einen ausgewählten Teil oder alle der Funktionen, zu denen sie fähig ist, auszuführen.

**20.** Flugzeug (20) nach Anspruch 18 oder 19, dadurch **gekennzeichnet,** daß die Pumpen (72, 80, 82) von jeder der hydraulischen Energieversorgungen (64-70) eine erste, flugtriebwerkgetriebene Pumpe (72) und eine zweite, elektrisch angetriebene Pumpe (80, 82), welche unabhängig von der ersten, triebwerksgetriebenen Pumpe (82) betrieben werden kann, umfaßt, und daß die Festkörper-Steuer- bzw. -Regeleinrichtungen (152) von jeder Energieversorgung (64-70) eine Einrichtung zum verhindern, daß die elektrisch angetriebenen Pumpen (80, 82) der beiden hydraulischen Energieversorgungen (64-70) gleichzeitig anlaufen gelassen werden, umfassen, so daß dadurch das elektrische System des Flugzeugs (20) davor bewahrt wird, durch das Anlaufen der elektrisch angetriebenen Pumpen (80, 82) überlastet zu werden.

## Revendications

**1.** Alimentation hydraulique embarquée (64-70) destinée à rendre disponible un fluide hydraulique sous pression pour au moins un appareil commandé hydrauliquement (46-63, 128-146) d'un aéronef (20), l'alimentation (64-70) comprenant plusieurs pompes (72, 80, 82) qui transmettent du fluide hydraulique sous pression nécessaire au fonctionnement de l'appareil (46-63, 128-146), un dispositif manuel de commande (166, 168, 174) destiné à permettre le fonctionnement des pompes (72, 80, 82) et à l'empêcher, un dispositif capteur (176-195) destiné à détecter l'état de fonctionnement de l'alimentation hydraulique (64-70), et un dispositif d'affichage (156, 164) monté dans la cabine (24) de l'aéronef (20) et destiné à afficher des informations relatives à l'état de fonctionnement, caractérisée par un organe centralisé de commande (152) à semi-conducteur assurant l'interconnexion du dispositif de commande (166, 168, 174), du dispositif capteur (176-195), des pompes (72, 80, 82) et du dispositif d'affichage (156, 164), des signaux provenant du dispositif de commande (166, 168, 174) et du dispositif capteur (176-195) étant acheminés vers l'organe de commande (152) et l'organe de commande (152) comprenant une carte autonome (154) possédant toutes les fonctions logiques nécessaires à la création des signaux de sortie de commande des pompes (72, 80, 82) et à la mise constamment à disposition d'informations pour le dispositif d'affichage (156, 164).

**2.** Alimentation hydraulique (64-70) selon la revendication 1, caractérisée par un dispositif (160, 162) de traitement des informations rendues disponibles par l'organe de commande (152) à semi-conducteur et concernant les problèmes posés par l'alimentation hydraulique (64-70) et qui nécessitent l'attention du personnel de maintenance.

**3.** Alimentation hydraulique (64-70) selon la revendication 1 ou 2, caractérisée en ce que les pompes (72, 80, 82) comprennent une première pompe (72) entraînée par un réacteur et une seconde pompe (80) de demande, et l'organe de commande à semi-conducteur (152) comporte un dispositif (222, 228, 234, 220, 230, 216) destiné à activer automatiquement la pompe de demande (80) lors d'une augmentation de la demande afin que des chutes brutales de la pression de fourniture du fluide hydraulique soient évitées.

4. Alimentation hydraulique (64-70) selon la revendication 3, caractérisée en ce que l'organe de commande (152) à semi-conducteur comporte un dispositif commandé par des signaux provenant du dispositif capteur (176-195) et destiné à prévoir une augmentation de la demande, et un dispositif (218, 220, 216) destiné à activer automatiquement la pompe de demande (80) lors d'une augmentation prédite de la demande.

5. Alimentation hydraulique (64-70) selon la revendication 3 ou 4, caractérisée en ce que l'organe de commande (152) à semi-conducteur comporte un dispositif (222, 228, 220, 216) destiné à assurer le fonctionnement de la pompe de demande (80) lorsque l'aéronef (20) est en vol et les volets (50, 52) de l'aéronef (20) sont abaissés, et un dispositif (218, 220, 216) destiné à assurer le fonctionnement de la pompe (80) après réception d'un signal (en transit) représentatif du déplacement imminent des volets (50, 52).

6. Alimentation hydraulique (64-70) selon l'une quelconque des revendications 3 à 5, caractérisée en ce que l'organe de commande (152) à semi-conducteur comporte un dispositif (224, 232) qui assure l'arrêt du fonctionnement de la pompe de demande (80) après que celle-ci (80) a fonctionné pendant une période déterminée.

7. Alimentation hydraulique (64-70) selon la revendication 6, caractérisée en ce que l'organe de commande (152) à semi-conducteur comporte un dispositif (224) provoquant efficacement l'arrêt du fonctionnement de la pompe de demande après le toucher du sol par l'aéronef (20) et l'écoulement ultérieur d'une période spécifiée.

8. Alimentation hydraulique (64-70) selon l'une quelconque des revendications 3 à 7, caractérisée en ce que l'organe de commande (152) à semi-conducteur comporte un dispositif (232) destiné à retarder la mise en fonctionnement de la pompe de demande (80) pendant une période prédéterminée après la réception d'un signal d'entrée représentatif d'une demande accrue à l'alimentation hydraulique (64-70), si bien que des anomalies transitoires de la pression du fluide hydraulique ne peuvent pas provoquer la mise en fonctionnement de la pompe de demande (80).

9. Alimentation hydraulique (64-70) selon l'une quelconque des revendications 3 à 8, caractérisée en ce que l'organe de commande (152) à semi-conducteur comporte un dispositif destiné à assurer automatiquement la mise en fonctionnement de la pompe de demande (80) en cas d'événement qui provoque l'arrêt de la première pompe (72) entraînée par un réacteur alors que l'aéronef (20) est en fonctionnement.

10. Alimentation hydraulique (64-70) selon l'une quelconque des revendications 3 à 9, caractérisée en ce que l'organe de commande (152) à semi-conducteur comporte un dispositif (234, 220, 216) destiné à provoquer la mise en fonctionnement de la pompe de demande (80) après réception d'un signal indiquant qu'un actionneur (196) d'arrêt de carburant a été manoeuvré et a interrompu la transmission de carburant au réacteur (33-36) qui entraîne la pompe (72).

11. Alimentation hydraulique (64-70) selon l'une quelconque des revendications précédentes, caractérisée en ce que les pompes (72, 80, 82) comportent en outre une troisième pompe auxiliaire (82) qui fonctionne indépendamment du réacteur (30-36) de l'aéronef, et l'organe de commande (152) à semi-conducteur Comporte un dispositif destiné à empêcher le fonctionnement de la pompe auxiliaire (82) lorsque le réacteur (30, 36) de l'aéronef fonctionne.

12. Alimentation hydraulique (64-70) selon la revendication 11, caractérisée en ce que l'organe de commande (152) à semi-conducteur comporte un dispositif (250) destiné à provoquer la mise en fonctionnement des pompes uniquement lorsqu'une alimentation externe (188) de la troisième pompe (82) lui est raccordée pendant le fonctionnement.

13. Alimentation hydraulique (64-70) selon l'une quelconque des revendications 3 à 12, caractérisée par un dispositif (200-204) activé à partir de l'organe de commande (152) à semi-conducteur afin qu'il avertisse l'équipage de l'habitacle du fait que (a) la pression du fluide hydraulique disponible à la sortie de la pompe (72) entraînée par le réacteur est tombée au-dessous d'une valeur minimale spécifiée, (b) la pression du fluide hydraulique disponible à la sortie de la pompe de demande (80) est tombée au-dessous d'une valeur minimale spécifiée, et/ou (c) il existe une panne dans l'alimentation hydraulique (64-70).

14. Alimentation hydraulique (64-70) selon l'une quelconque des revendications précédentes, caractérisée en ce que l'information rendue disponible par l'organe de commande (152) à semi-conducteur se rapporte à la quantité de fluide hydraulique dans le circuit, à la température du fluide hydraulique et à la pression du fluide.

**15.** Alimentation hydraulique (64-70) selon l'une quelconque des revendications précédentes, caractérisée par un interrupteur (168) commandé par le pilote et destiné à empêcher le fonctionnement des pompes (72, 80, 82) si un incendie se déclare dans l'aéronef (20) à un emplacement tel que l'incendie peut être alimenté par le fluide hydraulique qui s'échappe de l'alimentation hydraulique (64-70).

**16.** Alimentation hydraulique (64-70) selon l'une quelconque des revendications précédentes, caractérisée en ce que l'organe de commande (152) à semi-conducteur comporte un dispositif (212) d'activation d'un signal (208) dans l'habitacle ou la cabine (24) de l'aéronef (20) lorsque la pression hydraulique de tous les circuits de freinage (137, 150) qui ont équipé l'aéronef (20) tombe audessous d'un niveau spécifié.

**17.** Aéronef (20) équipé d'au moins une alimentation hydraulique (64-70) selon l'une quelconque des revendications précédentes.

**18.** Aéronef (20) selon la revendication 17, caractérisé par plusieurs alimentations hydrauliques (64-70), et au moins un appareil hydraulique (46-63, 128-146) qui peut être commandé par le fluide transmis par l'une de deux alimentations hydrauliques (64-70).

**19.** Aéronef (20) selon la revendication 17 ou 18, caractérisé en ce qu'un organe de commande (152) à semiconducteur tel que précité est associé à chacune des alimentations hydrauliques (64-70), tous les organes de commande (152) à semi-conducteur ont le même circuit logique, et les organes de commande (152) ont des signaux d'entrée et de sortie disponibles sélectivement qui peuvent être utilisés afin que chacun des organes de commande (152) à semi-conducteur puisse remplir une partie choisie ou la totalité des fonctions dont il est capable.

**20.** Aéronef (20) selon la revendication 18 ou 19, caractérisé en ce que les pompes (72, 80, 82) de chaque alimentation hydraulique (64-70) comportent une première pompe (72) entraînée par un réacteur de l'aéronef et une seconde pompe entraînée hydrauliquement (80, 82) qui peut fonctionner indépendamment de la première pompe (72) entraînée par le réacteur, et les organes de commande (152) à semi-conducteur de chaque alimentation (64-70) comportent un dispositif destiné à empêcher la mise en fonctionnement simultanée des pompes électriques (80, 82) des deux alimentations hydrauliques (64-70), si bien que le circuit électrique de l'aéronef (20) ne peut pas être surchargé par la mise en fonctionnement des pompes électriques (80, 82).

FIG. 1

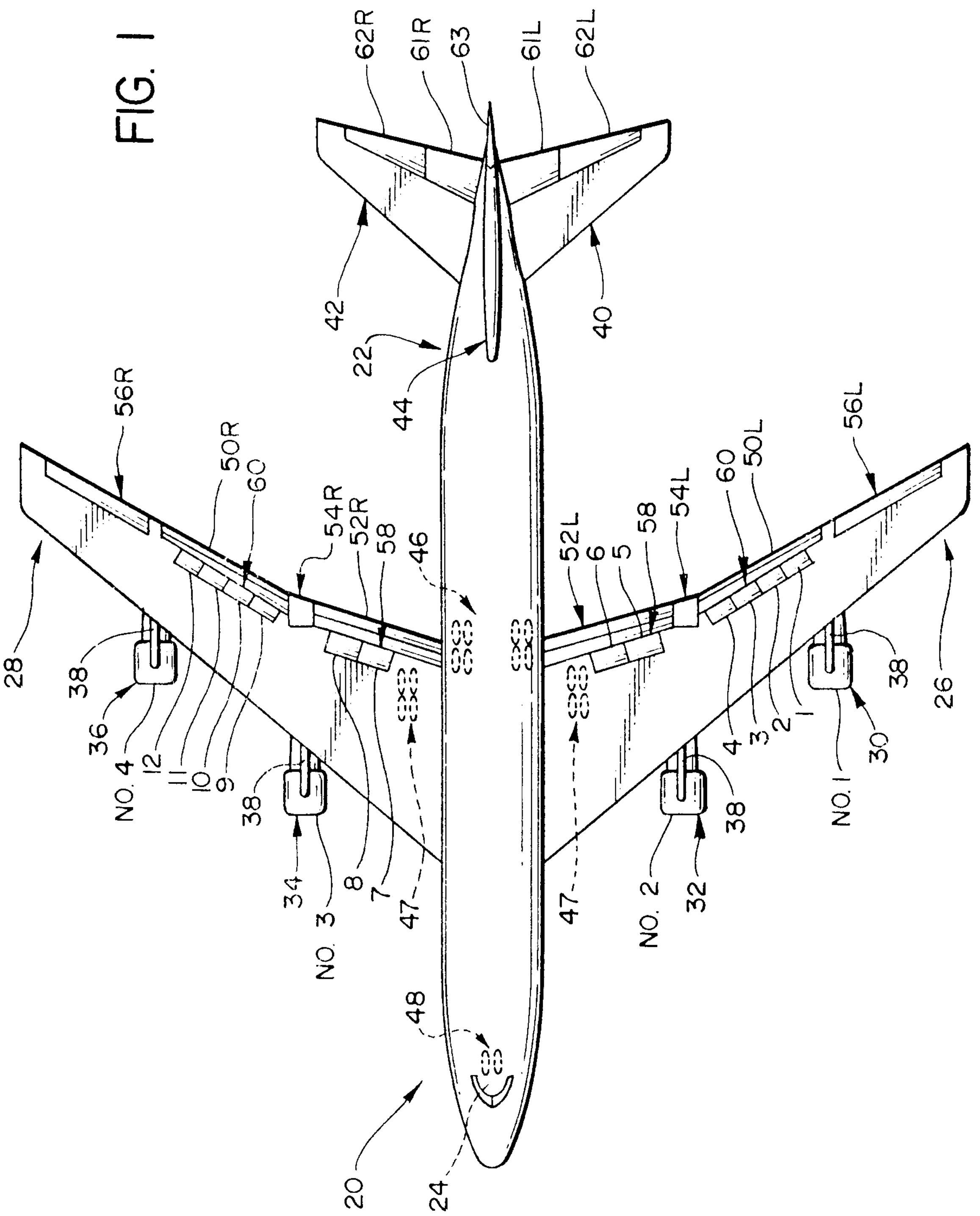
62R
61R
63
61L
62L
42
40
22
44
56R
56L
50R
60
54R
52R
58
46
52L
6
5
58
54L
60
50L
28
38
36
NO. 4
12
11
10
9
38
34
NO. 3
8
7
47
47
NO. 2
32
38
4
3
2
1
38
30
NO. 1
26
48
20
24

FIG. 2

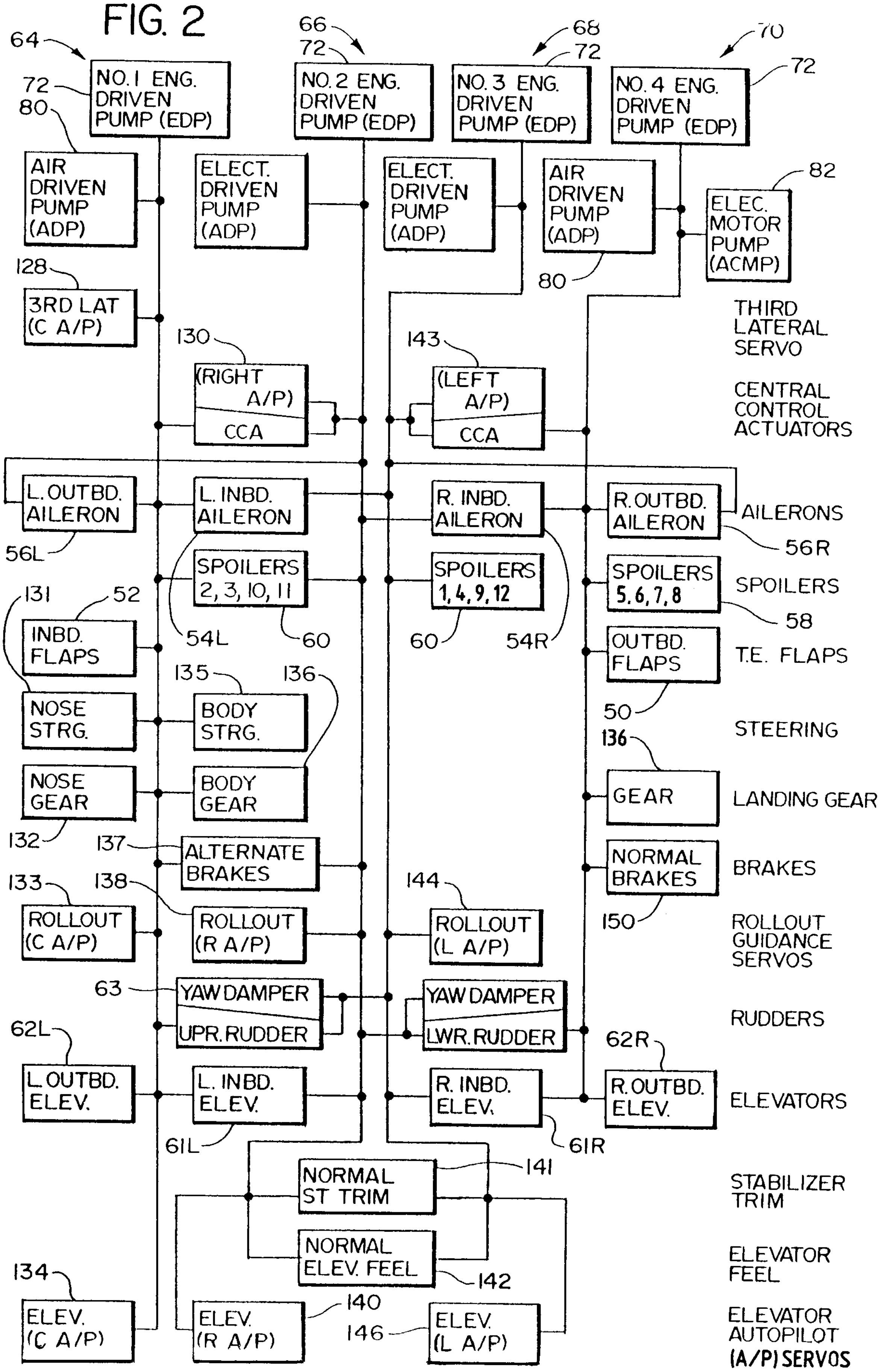
NO. 1 ENG. DRIVEN PUMP (EDP)
NO. 2 ENG. DRIVEN PUMP (EDP)
NO. 3 ENG. DRIVEN PUMP (EDP)
NO. 4 ENG. DRIVEN PUMP (EDP)
AIR DRIVEN PUMP (ADP)
ELECT. DRIVEN PUMP (ADP)
ELECT. DRIVEN PUMP (ADP)
AIR DRIVEN PUMP (ADP)
ELEC. MOTOR PUMP (ACMP)
3RD LAT (C A/P)
THIRD LATERAL SERVO
(RIGHT A/P) CCA
(LEFT A/P) CCA
CENTRAL CONTROL ACTUATORS
L. OUTBD. AILERON
L. INBD. AILERON
R. INBD. AILERON
R. OUTBD. AILERON
AILERONS
SPOILERS 2, 3, 10, 11
SPOILERS 1, 4, 9, 12
SPOILERS 5, 6, 7, 8
SPOILERS
INBD. FLAPS
OUTBD. FLAPS
T.E. FLAPS
NOSE STRG.
BODY STRG.
STEERING
NOSE GEAR
BODY GEAR
GEAR
LANDING GEAR
ALTERNATE BRAKES
NORMAL BRAKES
BRAKES
ROLLOUT (C A/P)
ROLLOUT (R A/P)
ROLLOUT (L A/P)
ROLLOUT GUIDANCE SERVOS
YAW DAMPER
UPR. RUDDER
YAW DAMPER
LWR. RUDDER
RUDDERS
L. OUTBD. ELEV.
L. INBD. ELEV.
R. INBD. ELEV.
R. OUTBD. ELEV.
ELEVATORS
NORMAL ST TRIM
STABILIZER TRIM
NORMAL ELEV. FEEL
ELEVATOR FEEL
ELEV. (C A/P)
ELEV. (R A/P)
ELEV. (L A/P)
ELEVATOR AUTOPILOT (A/P) SERVOS
64
66
68
70
72
80
82
128
130
143
56L
56R
131
52
54L
60
60
54R
58
135
136
50
136
132
137
133
138
144
150
63
62L
62R
61L
61R
141
142
134
140
146

FIG. 3

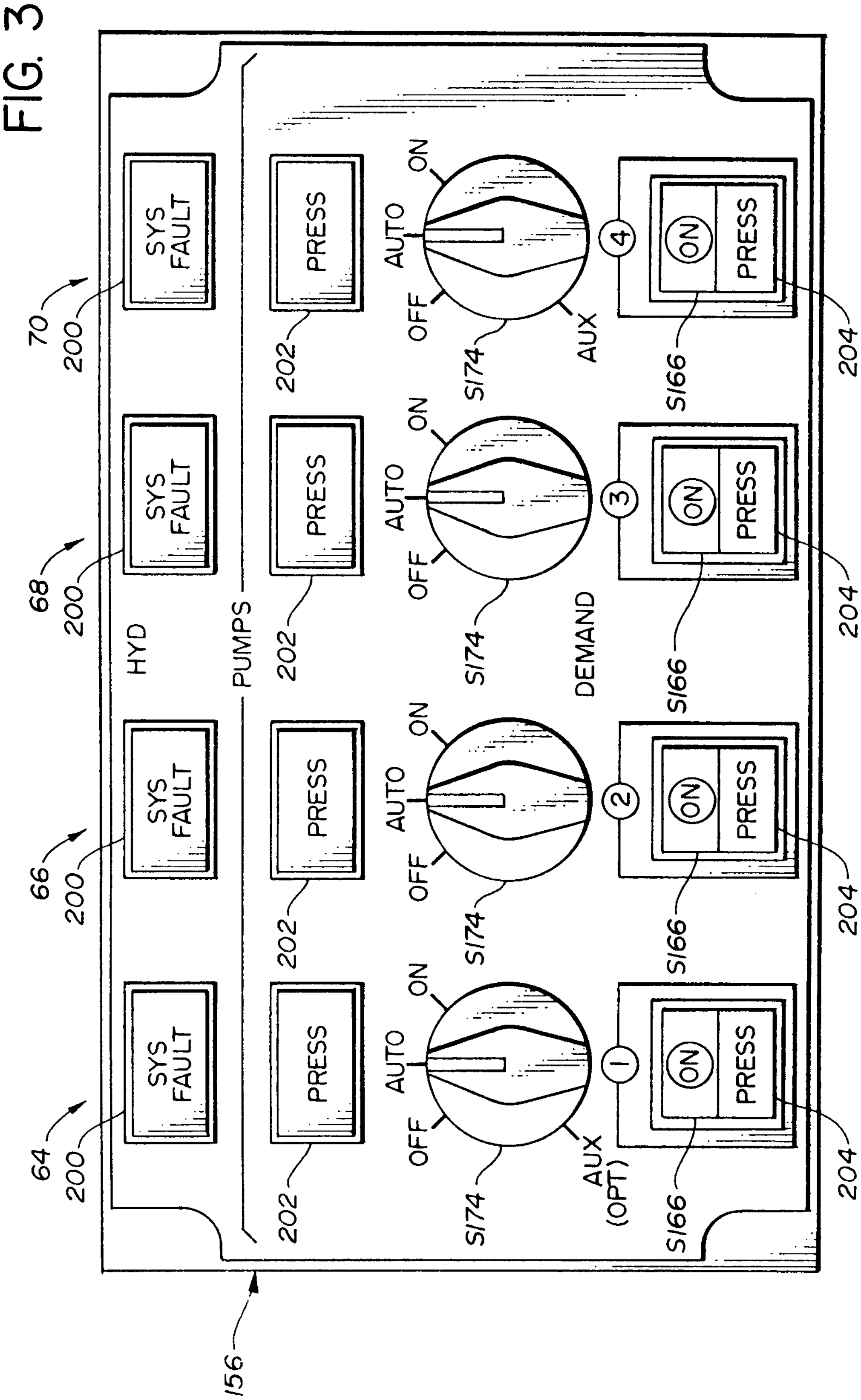
HYD
PUMPS
SYS FAULT
PRESS
OFF
AUTO
ON
AUX
AUX (OPT)
DEMAND
ON
PRESS
1
2
3
4
64
66
68
70
156
200
202
204
166
174

FIG. 4

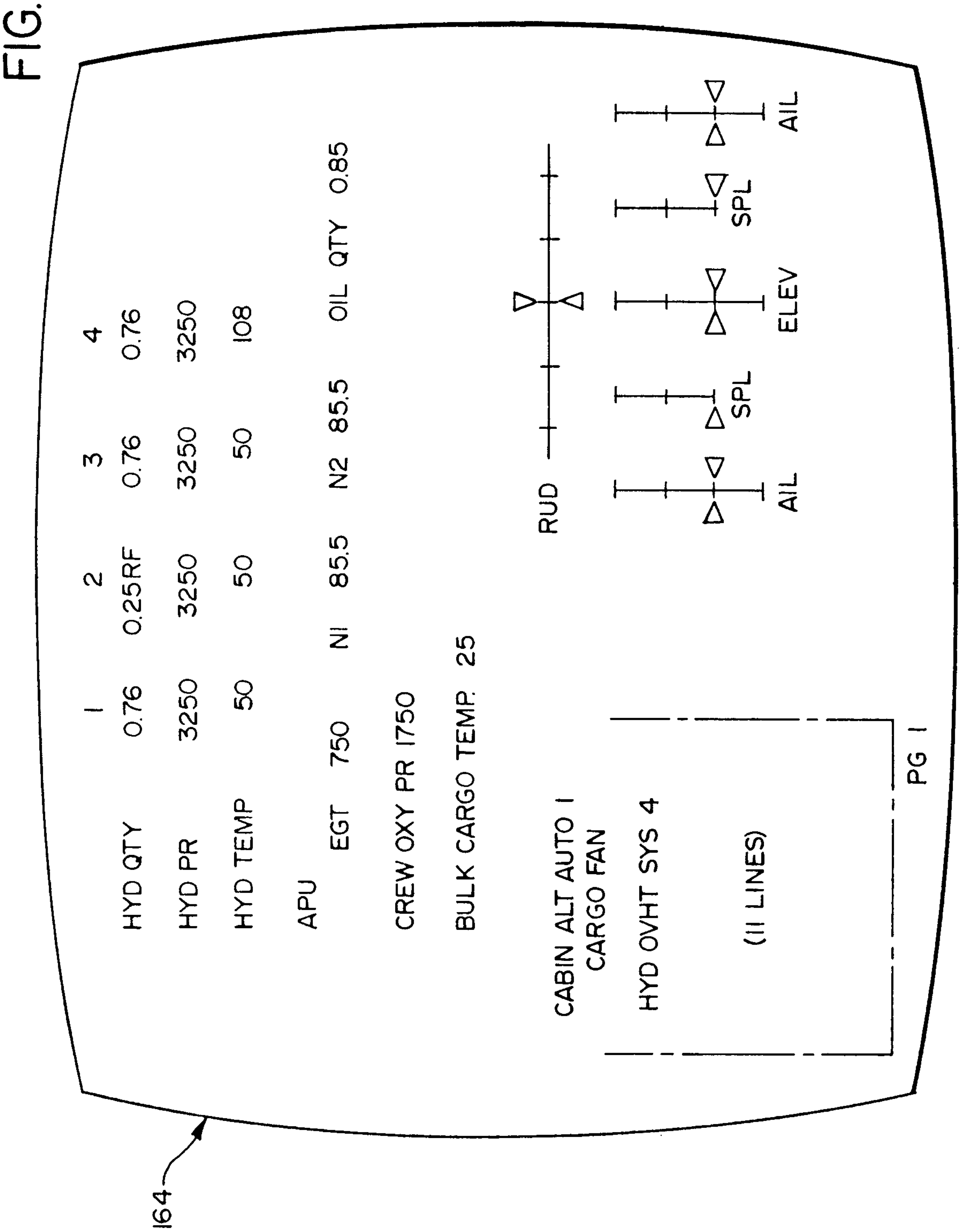
1 2 3 4
HYD QTY 0.76 0.25RF 0.76 0.76
HYD PR 3250 3250 3250 3250
HYD TEMP 50 50 50 108
APU
EGT 750 N1 85.5 N2 85.5 OIL QTY 0.85
CREW OXY PR 1750
BULK CARGO TEMP. 25
CABIN ALT AUTO 1
CARGO FAN
HYD OVHT SYS 4
(11 LINES)
PG 1
RUD
AIL
SPL
ELEV
SPL
AIL
164

FIG. 5

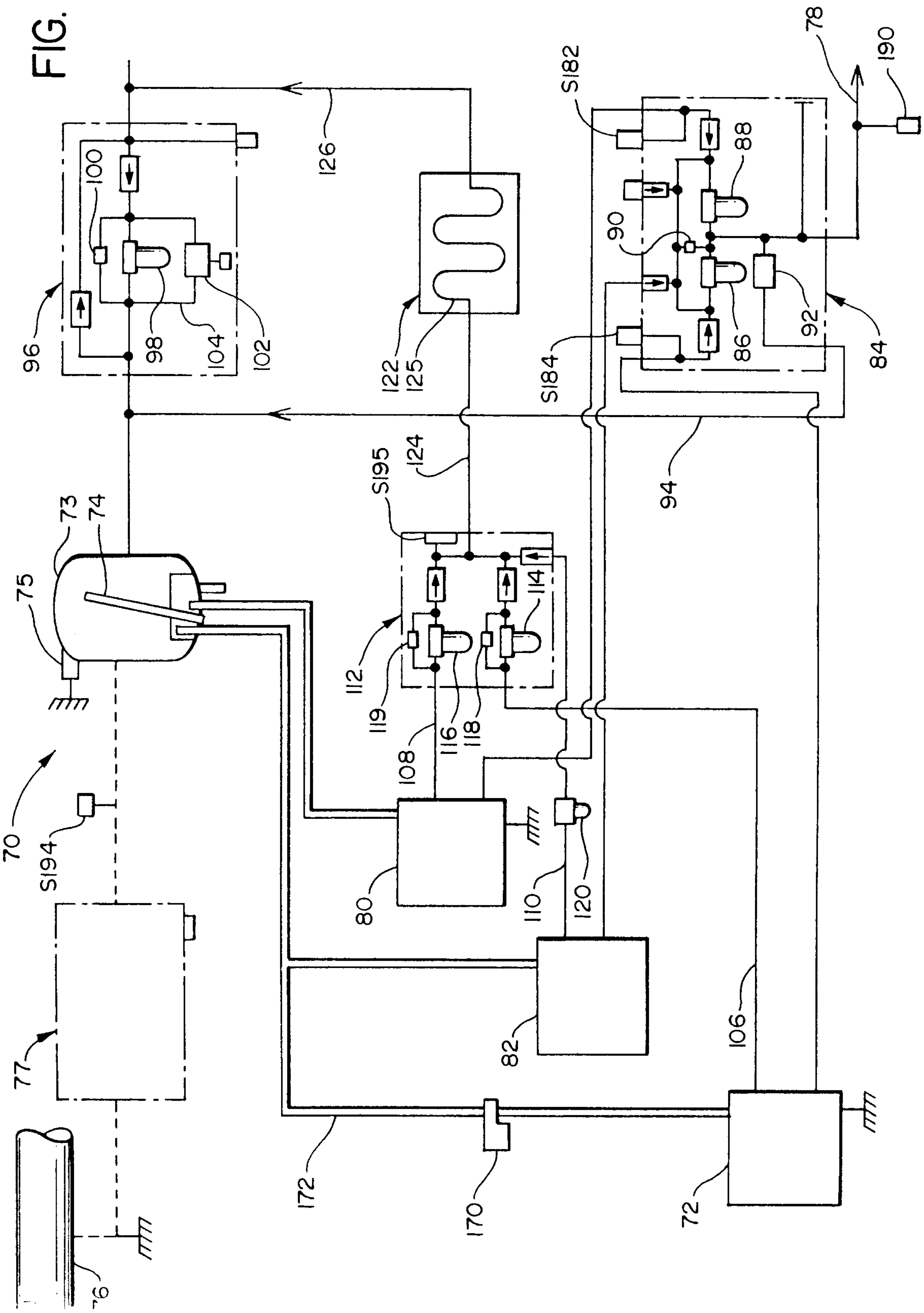
70
72
73
74
75
76
77
78
80
82
84
86
88
90
92
94
96
98
100
102
104
106
108
110
112
114
116
118
119
120
122
124
125
126
170
172
190
S182
S184
S194
S195

FIG. 6A

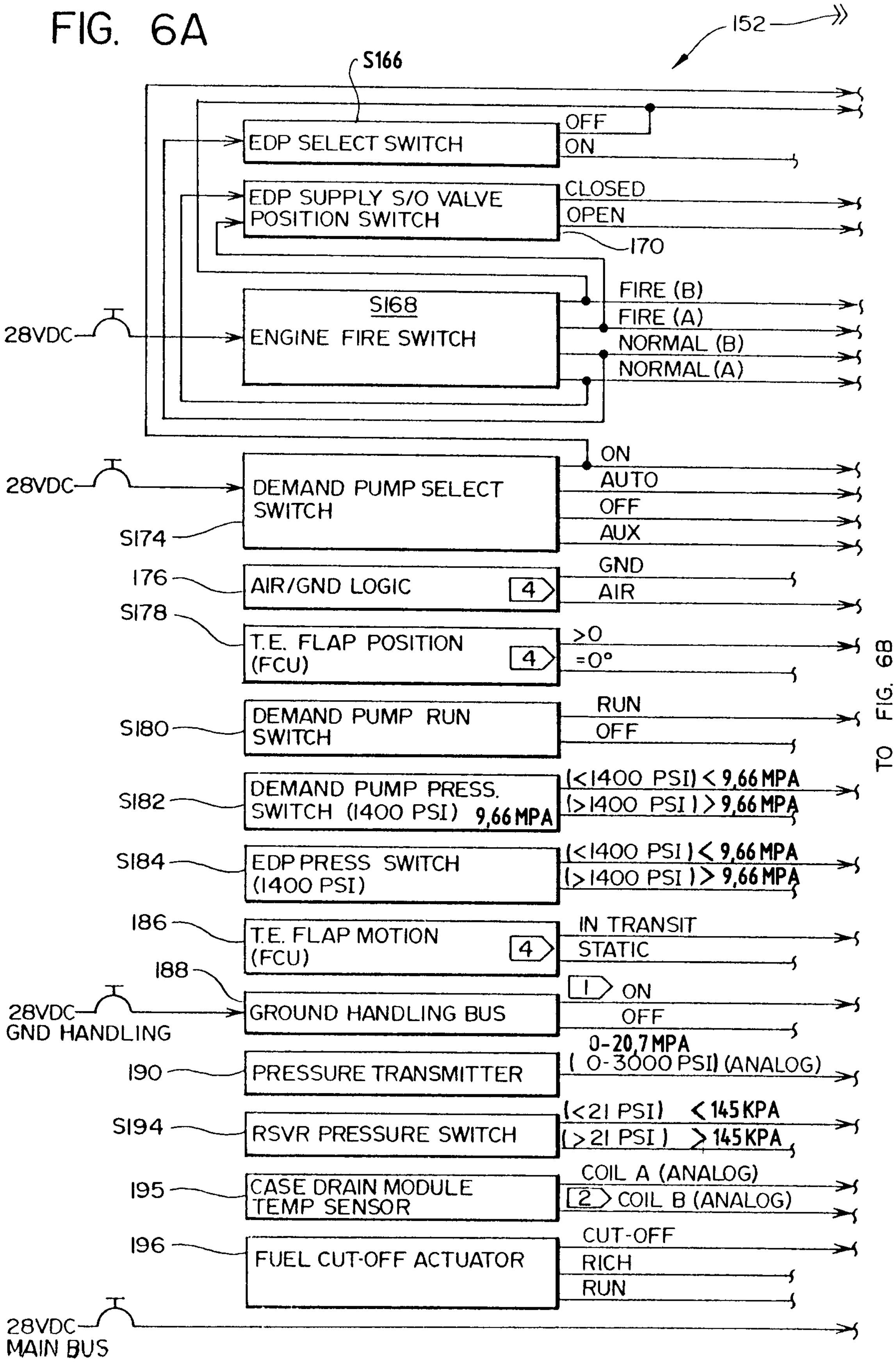

152
S166
EDP SELECT SWITCH
OFF
ON
EDP SUPPLY S/O VALVE POSITION SWITCH
CLOSED
OPEN
170
S168
ENGINE FIRE SWITCH
28VDC
FIRE (B)
FIRE (A)
NORMAL (B)
NORMAL (A)
28VDC
DEMAND PUMP SELECT SWITCH
S174
ON
AUTO
OFF
AUX
176
AIR/GND LOGIC
4
GND
AIR
S178
T.E. FLAP POSITION (FCU)
4
>0
=0°
S180
DEMAND PUMP RUN SWITCH
RUN
OFF
S182
DEMAND PUMP PRESS. SWITCH (1400 PSI) 9,66 MPA
(<1400 PSI) < 9,66 MPA
(>1400 PSI) > 9,66 MPA
S184
EDP PRESS SWITCH (1400 PSI)
(<1400 PSI) < 9,66 MPA
(>1400 PSI) > 9,66 MPA
186
T.E. FLAP MOTION (FCU)
4
IN TRANSIT
STATIC
188
28VDC GND HANDLING
GROUND HANDLING BUS
1
ON
OFF
190
PRESSURE TRANSMITTER
0-20,7 MPA
( 0-3000 PSI) (ANALOG)
S194
RSVR PRESSURE SWITCH
(<21 PSI) < 145 KPA
(>21 PSI) > 145 KPA
195
CASE DRAIN MODULE TEMP SENSOR
COIL A (ANALOG)
2
COIL B (ANALOG)
196
FUEL CUT-OFF ACTUATOR
CUT-OFF
RICH
RUN
28VDC MAIN BUS
TO FIG. 6B

FIG. 6B

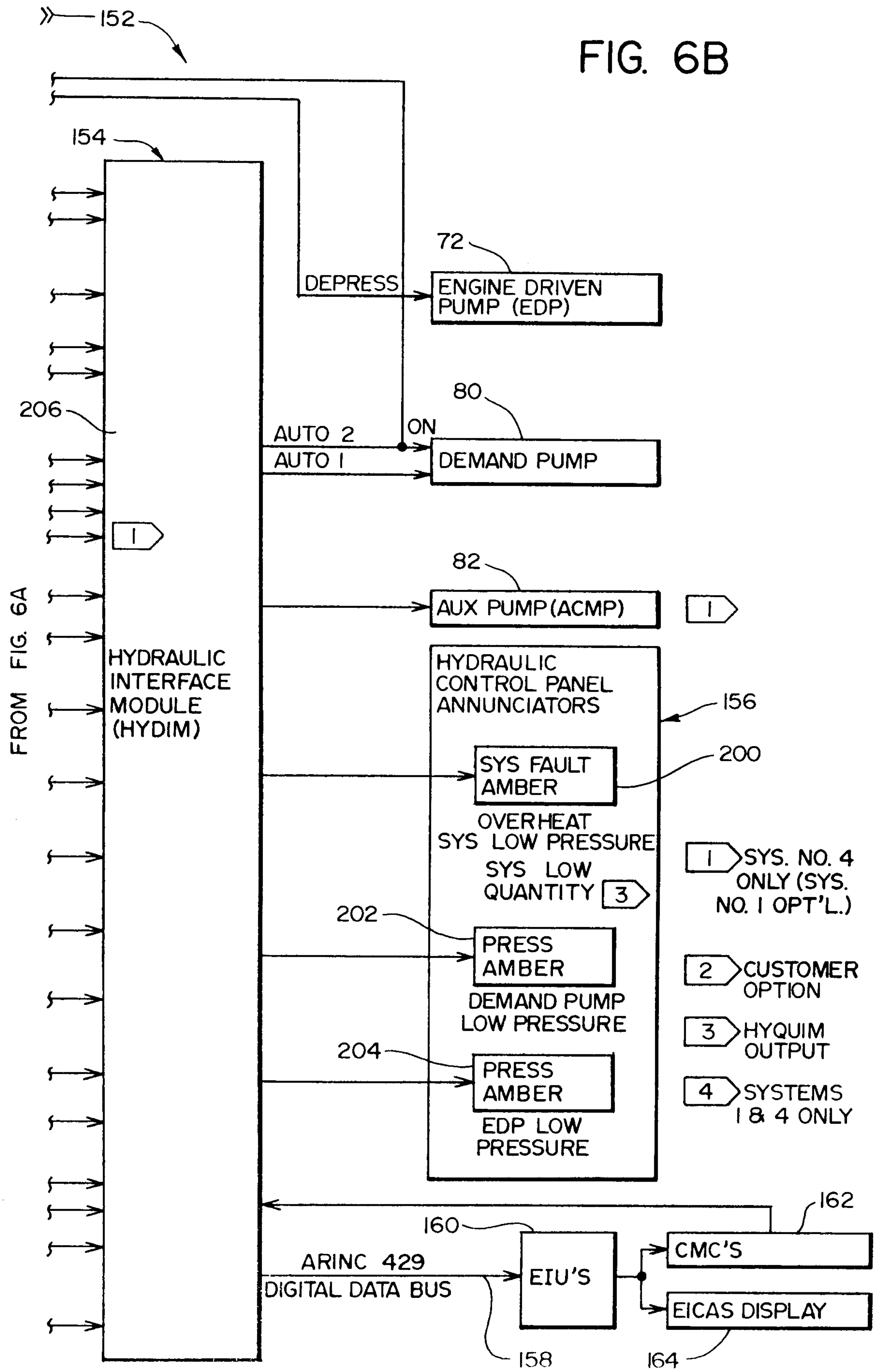
152
154
FROM FIG. 6A
HYDRAULIC
INTERFACE
MODULE
(HYDIM)
206
72
DEPRESS
ENGINE DRIVEN
PUMP (EDP)
80
AUTO 2
AUTO 1
ON
DEMAND PUMP
82
AUX PUMP (ACMP)
1
HYDRAULIC
CONTROL PANEL
ANNUNCIATORS
156
SYS FAULT
AMBER
200
OVERHEAT
SYS LOW PRESSURE
SYS LOW
QUANTITY 3
202
PRESS
AMBER
DEMAND PUMP
LOW PRESSURE
204
PRESS
AMBER
EDP LOW
PRESSURE
1 SYS. NO. 4
ONLY (SYS.
NO. 1 OPT'L.)
2 CUSTOMER
OPTION
3 HYQUIM
OUTPUT
4 SYSTEMS
1 & 4 ONLY
162
160
ARINC 429
DIGITAL DATA BUS
EIU'S
CMC'S
EICAS DISPLAY
158
164

FIG. 7A

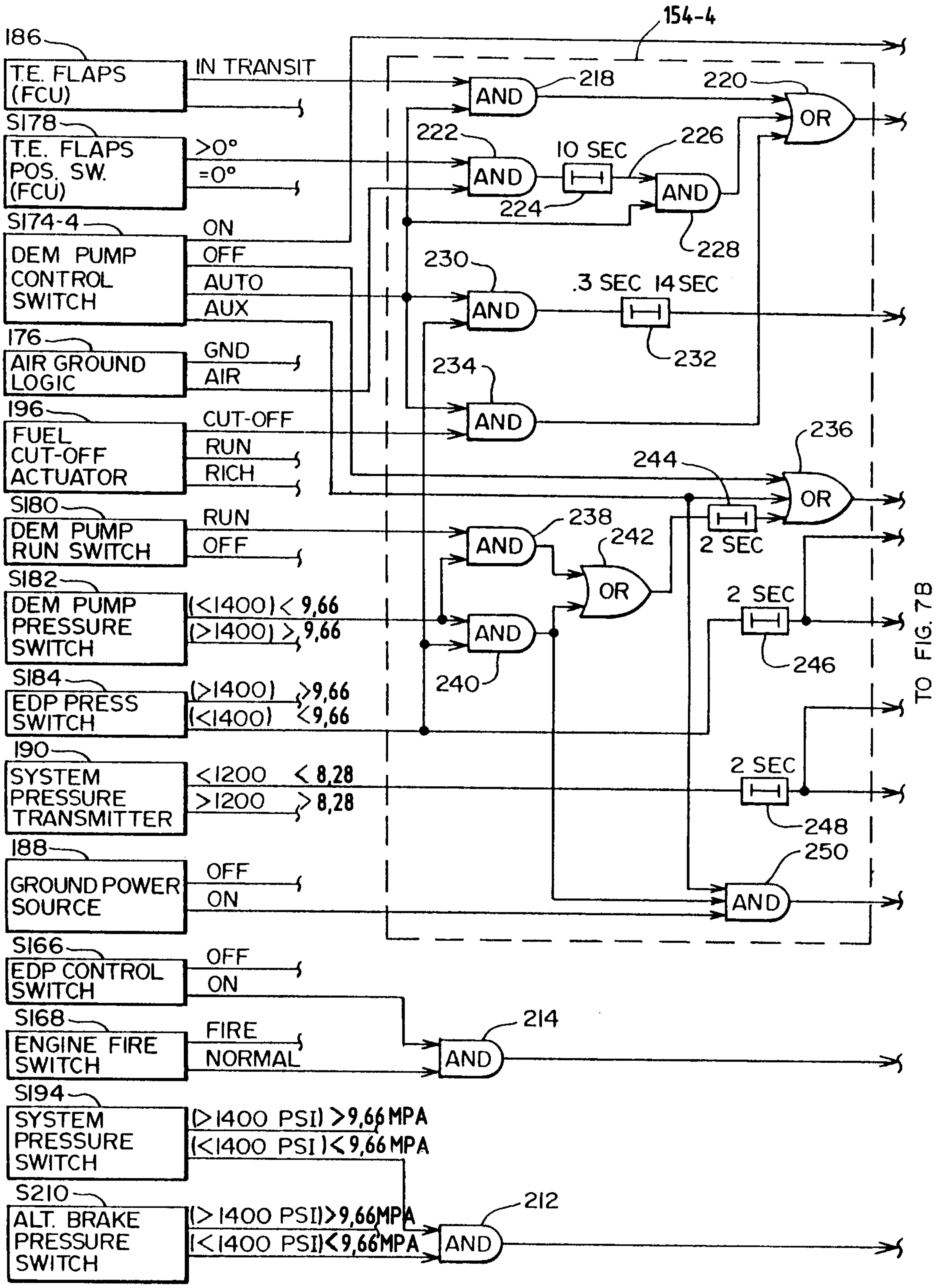
154-4
186
T.E. FLAPS (FCU)
IN TRANSIT
S178
T.E. FLAPS POS. SW. (FCU)
>0°
=0°
S174-4
DEM PUMP CONTROL SWITCH
ON
OFF
AUTO
AUX
176
AIR GROUND LOGIC
GND
AIR
196
FUEL CUT-OFF ACTUATOR
CUT-OFF
RUN
RICH
S180
DEM PUMP RUN SWITCH
RUN
OFF
S182
DEM PUMP PRESSURE SWITCH
(<1400) < 9,66
(>1400) > 9,66
S184
EDP PRESS SWITCH
(>1400) >9,66
(<1400) <9,66
190
SYSTEM PRESSURE TRANSMITTER
<1200 < 8,28
>1200 > 8,28
188
GROUND POWER SOURCE
OFF
ON
S166
EDP CONTROL SWITCH
OFF
ON
S168
ENGINE FIRE SWITCH
FIRE
NORMAL
S194
SYSTEM PRESSURE SWITCH
(>1400 PSI) >9,66 MPA
(<1400 PSI) <9,66 MPA
S210
ALT. BRAKE PRESSURE SWITCH
(> 1400 PSI)>9,66MPA
(< 1400 PSI)<9,66MPA
AND
218
220
OR
222
10 SEC
226
224
228
230
.3 SEC 14 SEC
232
234
236
244
238
242
2 SEC
240
246
248
250
214
212
TO FIG. 7B

FIG. 7B

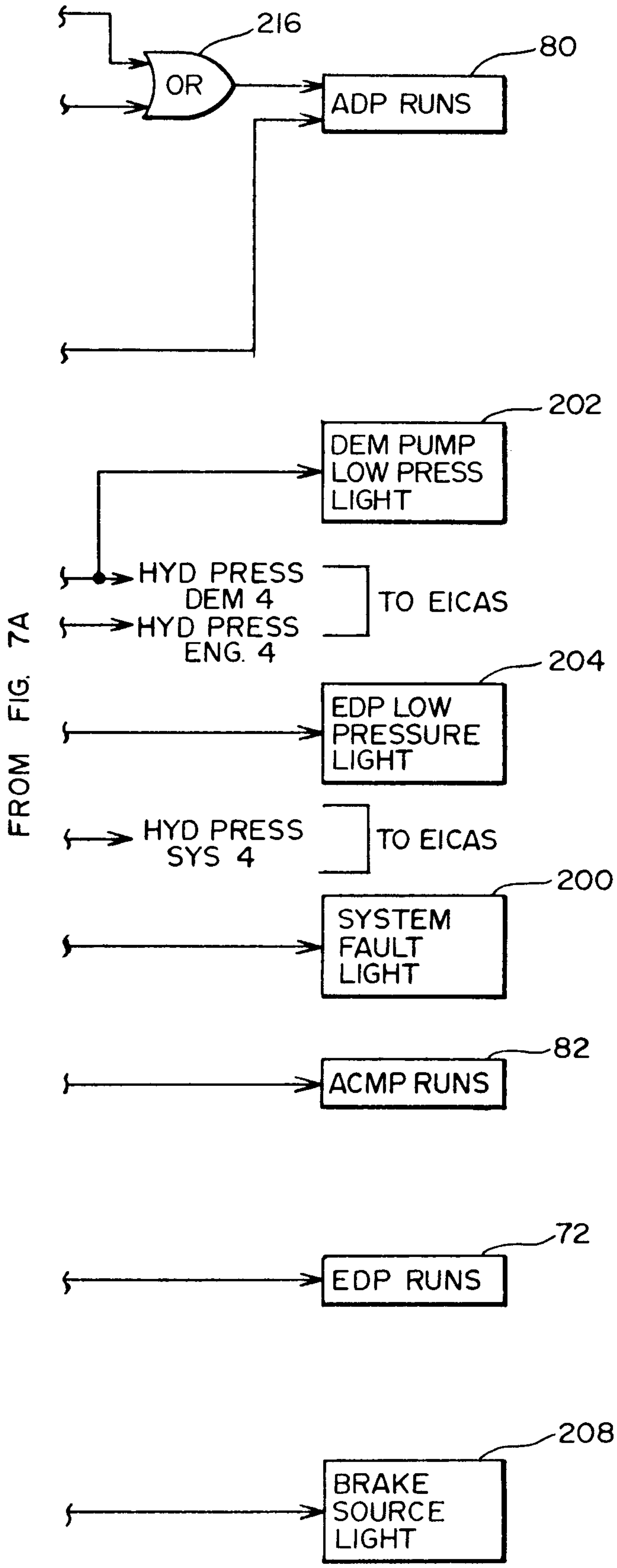
216
OR
80
ADP RUNS
202
DEM PUMP
LOW PRESS
LIGHT
HYD PRESS
DEM 4
HYD PRESS
ENG. 4
TO EICAS
FROM FIG. 7A
204
EDP LOW
PRESSURE
LIGHT
HYD PRESS
SYS 4
TO EICAS
200
SYSTEM
FAULT
LIGHT
82
ACMP RUNS
72
EDP RUNS
208
BRAKE
SOURCE
LIGHT

FIG. 8

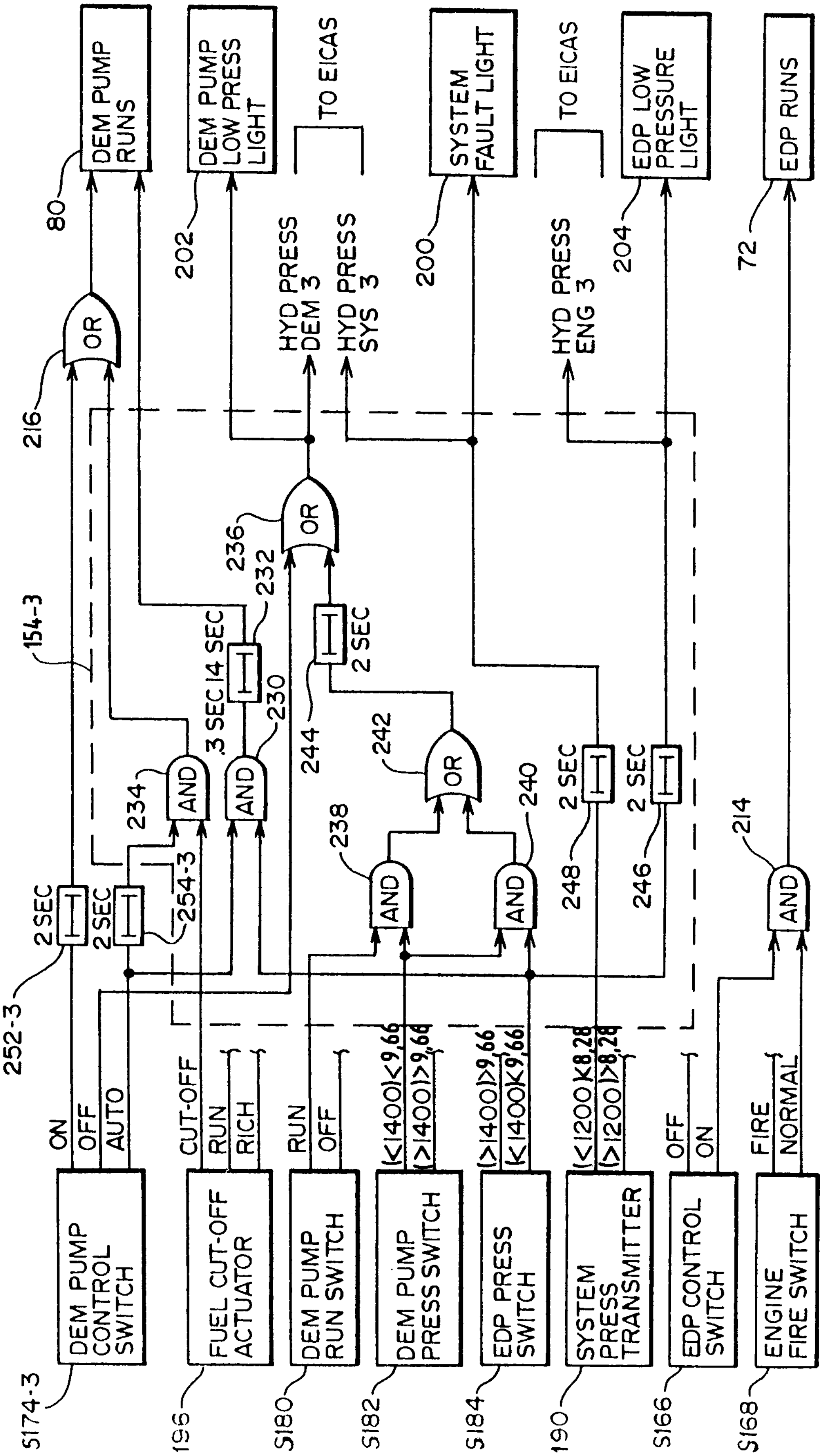
DEM PUMP RUNS
DEM PUMP LOW PRESS LIGHT
TO EICAS
SYSTEM FAULT LIGHT
TO EICAS
EDP LOW PRESSURE LIGHT
EDP RUNS
80
202
200
204
72
216
OR
HYD PRESS DEM 3
HYD PRESS SYS 3
HYD PRESS ENG 3
236
OR
232
154-3
3 SEC
14 SEC
2 SEC
230
244
242
OR
234
AND
AND
238
240
AND
AND
2 SEC
2 SEC
248
246
214
AND
2 SEC
2 SEC
252-3
254-3
ON
OFF
AUTO
CUT-OFF
RUN
RICH
RUN
OFF
(<1400)<9,66
(>1400)>9,66
(>1400)>9,66
(<1400)<9,66
(<1200)<8,28
(>1200)>8,28
OFF
ON
FIRE
NORMAL
DEM PUMP CONTROL SWITCH
FUEL CUT-OFF ACTUATOR
DEM PUMP RUN SWITCH
DEM PUMP PRESS SWITCH
EDP PRESS SWITCH
SYSTEM PRESS TRANSMITTER
EDP CONTROL SWITCH
ENGINE FIRE SWITCH
S174-3
196
S180
S182
S184
190
S166
S168

FIG. 9

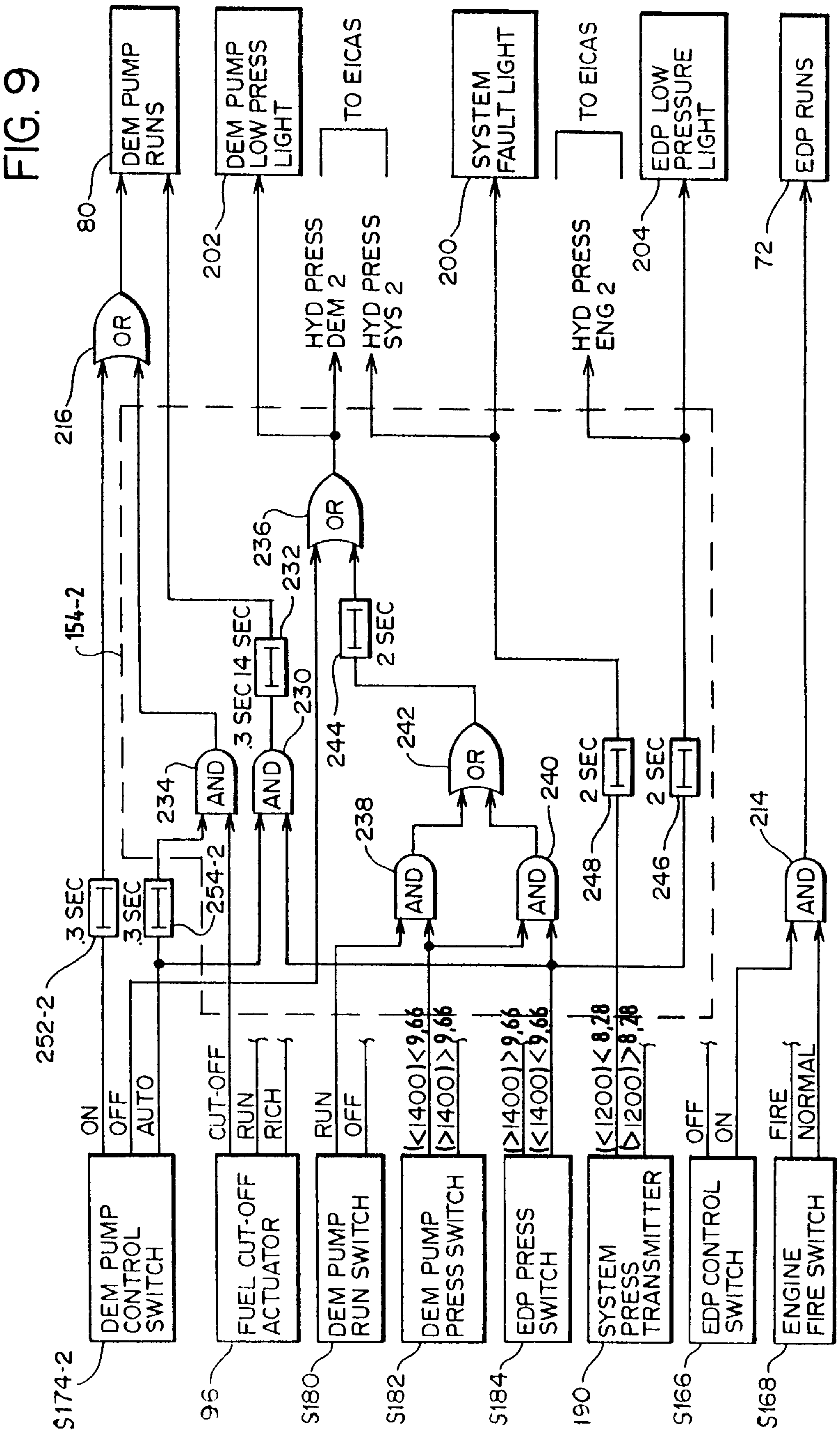
DEM PUMP CONTROL SWITCH
ON
OFF
AUTO
FUEL CUT-OFF ACTUATOR
CUT-OFF
RUN
RICH
DEM PUMP RUN SWITCH
RUN
OFF
DEM PUMP PRESS SWITCH
(<1400)<9,66
(>1400)>9,66
EDP PRESS SWITCH
(>1400)>9,66
(<1400)<9,66
SYSTEM PRESS TRANSMITTER
(<1200)<8,28
(>1200)>8,28
EDP CONTROL SWITCH
OFF
ON
ENGINE FIRE SWITCH
FIRE
NORMAL
S174-2
96
S180
S182
S184
190
S166
S168
252-2
.3 SEC
.3 SEC
254-2
154-2
AND
234
AND
230
.3 SEC 14 SEC
232
236
OR
244
2 SEC
242
OR
238
AND
240
AND
248
2 SEC
246
2 SEC
214
AND
216
OR
HYD PRESS DEM 2
HYD PRESS SYS 2
HYD PRESS ENG 2
TO EICAS
TO EICAS
80
DEM PUMP RUNS
202
DEM PUMP LOW PRESS LIGHT
200
SYSTEM FAULT LIGHT
204
EDP LOW PRESSURE LIGHT
72
EDP RUNS

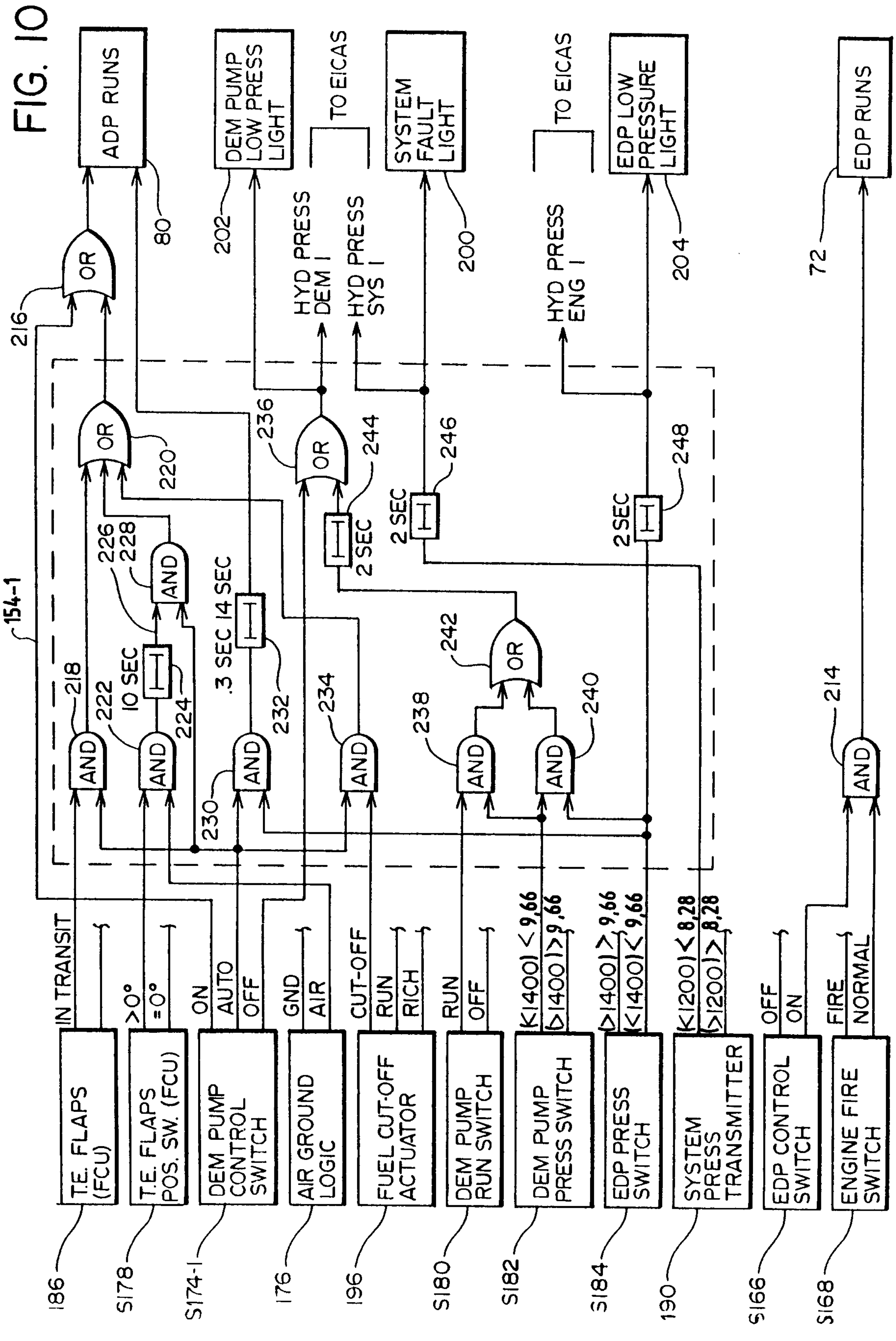

ADP RUNS
DEM PUMP LOW PRESS LIGHT
TO EICAS
SYSTEM FAULT LIGHT
TO EICAS
EDP LOW PRESSURE LIGHT
EDP RUNS
HYD PRESS DEM I
HYD PRESS SYS I
HYD PRESS ENG I
OR
AND
10 SEC
.3 SEC 14 SEC
2 SEC
154-1
IN TRANSIT
>0°
=0°
ON
AUTO
OFF
GND
AIR
CUT-OFF
RUN
RICH
RUN
OFF
K(1400) < 9,66
(>1400) > 9,66
(>1400) > 9,66
K(1400) < 9,66
K(1200) < 8,28
(>1200) > 8,28
OFF
ON
FIRE
NORMAL
T.E. FLAPS (FCU)
T.E. FLAPS POS. SW. (FCU)
DEM PUMP CONTROL SWITCH
AIR GROUND LOGIC
FUEL CUT-OFF ACTUATOR
DEM PUMP RUN SWITCH
DEM PUMP PRESS SWITCH
EDP PRESS SWITCH
SYSTEM PRESS TRANSMITTER
EDP CONTROL SWITCH
ENGINE FIRE SWITCH
186
S178
S174-1
176
196
S180
S182
S184
190
S166
S168
80
202
200
204
72
216
218
220
222
224
226
228
230
232
234
236
238
240
242
244
246
248
214


FIG. 10